(19) Europäisches Patentamt
European Patent Office
Office européen des brevets

(11) **EP 3 281 026 B1**

(12) **FASCICULE DE BREVET EUROPEEN**

(45) Date de publication et mention de la délivrance du brevet:
**08.05.2019 Bulletin 2019/19**

(21) Numéro de dépôt: **16715316.2**

(22) Date de dépôt: **08.04.2016**

(51) Int Cl.:
***G01S 3/74*** (2006.01)

(86) Numéro de dépôt international:
**PCT/EP2016/057819**

(87) Numéro de publication internationale:
**WO 2016/162515 (13.10.2016 Gazette 2016/41)**

(54) **PROCÉDÉ DE SÉPARATION DE SOURCES POUR SIGNAUX PARCIMONIEUX**

VERFAHREN ZUR TRENNUNG VON QUELLEN FÜR SPÄRLICHE SIGNALE

METHOD OF SEPARATING SOURCES FOR PARSIMONIOUS SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2015 FR 1500724**

(43) Date de publication de la demande:
**14.02.2018 Bulletin 2018/07**

(73) Titulaire: **Thales**
**92400 Courbevoie (FR)**

(72) Inventeurs:
• **LE MEUR, Anne**
**78851 Elancourt (FR)**
• **DELABBAYE, Jean-Yves**
**78851 Elancourt (FR)**

(74) Mandataire: **Lavoix**
**2, place d'Estienne d'Orves**
**75441 Paris Cedex 09 (FR)**

(56) Documents cités:
**EP-A1- 2 857 856     WO-A1-2015/024827**

• NGOC Q K DUONG ET AL: "Under-Determined Reverberant Audio Source Separation Using a Full-Rank Spatial Covariance Model", IEEE TRANSACTIONS ON AUDIO, SPEECH AND LANGUAGE PROCESSING, IEEE SERVICE CENTER, NEW YORK, NY, USA, vol. 18, no. 7, 1 septembre 2010 (2010-09-01), pages 1830-1840, XP011309385, ISSN: 1558-7916, DOI: 10.1109/TASL.2010.2050716
• KRITCHMAN S ET AL: "Non-Parametric Detection of the Number of Signals: Hypothesis Testing and Random Matrix Theory", IEEE TRANSACTIONS ON SIGNAL PROCESSING, IEEE SERVICE CENTER, NEW YORK, NY, US, vol. 57, no. 10, 1 octobre 2009 (2009-10-01), pages 3930-3941, XP011268796, ISSN: 1053-587X, DOI: 10.1109/TSP.2009.2022897 cité dans la demande
• Emmanuel Vincent: "Contributions to audio source separation and content description", , 18 septembre 2013 (2013-09-18), XP055245917, Université Rennes 1, 2012 Extrait de l'Internet: URL:https://tel.archives-ouvertes.fr/tel-0 0758517v2 [extrait le 2016-01-29] cité dans la demande

**Description**

La présente invention concerne un procédé de détermination de la direction d'arrivée, respectivement de la direction d'arrivée et de la polarisation, de signaux issus de plusieurs sources radioélectriques au moyen d'un réseau de capteurs à diversité d'espace monopolarisation, respectivement bipolarisation, composé de P voies de réception avec P> 2 et P pouvant être inférieur au nombre de sources, lorsque le degré de parcimonie des signaux est tel que localement, dans leur représentation temps/fréquence, le nombre de sources présentes est égal à 2 au plus.

La séparation de sources consiste à estimer la direction d'arrivée (connue sous l'acronyme DOA pour Direction of Arrivai en anglais) de signaux issus de plusieurs sources à partir de l'observation d'un mélange temporel et spectral de ces signaux, faite sur un réseau de capteurs, afin de pouvoir isoler les contributions de chaque source et en faire l'analyse de manière séparée.

Dans les situations simples, c'est-à-dire lorsque les signaux sont séparables en temps, ou lorsqu'ils sont séparables en fréquence, des méthodes élémentaires telles qu'un prélèvement temporel borné ou un filtrage linéaire sont suffisantes, mais elles ne sont plus applicables dans les situations complexes où les signaux sont mélangés temporellement et fréquentiellement. Or ce type de situation est d'autant plus fréquent que la densité des émetteurs augmente, et avec elle la densité des signaux, comme c'est le cas par exemple avec la prolifération des émetteurs d'ondes radioélectriques.

La présente invention concerne en particulier, mais de manière non restrictive, la séparation de sources radioélectriques, observées sur un réseau d'antennes à diversité d'espace (réseau interférométrique).

D'une manière générale, sans faire d'hypothèse sur les signaux reçus, le nombre de sources que l'on peut séparer est limité par le nombre de capteurs disponibles.

Le problème que l'on cherche à résoudre est d'augmenter le nombre de sources que l'on peut séparer à nombre de capteurs fixé, afin de limiter le coût, l'encombrement, le poids et la consommation électrique du récepteur. Ces contraintes sont particulièrement critiques dans les applications embarquées. On exploitera pour cela les structures temporelle et spectrale des signaux que l'on trouve fréquemment dans les applications (télécommunications, écoutes radar, acoustique, ...).

Les techniques classiques de séparation de sources reposent sur l'utilisation des statistiques d'ordre 2 (voir [1] « Les méthodes haute résolution, traitements d'antenne et analyse spectrale », Ouvrage collectif sous la direction de Sylvie Marcos, eds Hermès 1998). Lorsque le nombre de capteurs est P, elles permettent de séparer au plus P-1 sources dans les cas classiques (e.g. capteurs alignés, équidistants).

Ces techniques ont été étendues aux ordres supérieurs, le plus souvent l'ordre 4 (voir [2] « Statistiques d'ordre supérieur pour le traitement du signal », J.L. Lacoume, P.O. Amblard, P. Comon, Dunod 2003, [3] « On the virtual array concept for higher order array processing", P. Chevalier, L. Albera, A. Ferréol, P. Comon, IEEE Transations on Signal Processing, vol 53, n°4, april 2005, [4] « High resolution direction finding from higher order statistics : the 2-q MUSIC algorithm », P. Chevalier, A. Ferréol, L. Alberra, IEEE Transactions on Signal Processing, vol 54, n° 8, august 2006).

Les méthodes aux ordres supérieurs nécessitent de disposer d'un très grand nombre d'échantillons et leur coût de calcul est élevé. Les méthodes de décomposition des mesures en composantes indépendantes (Indépendant Components Analysis ou ICA en anglais) ont été aussi mises en oeuvre pour la séparation de sources ([5] "Handbook of blind source séparation", P. Comon, C. Jutten, Academic Press 2010). Les signaux gaussiens étant complètement caractérisés par leurs moments d'ordre 1 et 2, toutes ces méthodes ne s'appliquent qu'aux signaux non gaussiens (voir [6] "Two decades of array signal processing research", H. Krim et M. Viberg, IEEE Signal Processing Magazine, july 1996). Le nombre de sources séparables reste dépendant du nombre de capteurs disponibles.

Pour donner des capacités supplémentaires en termes de séparation de sources, des chercheurs ont exploité des propriétés spécifiques que l'on rencontre dans les applications, au lieu de rechercher comme ci-dessus des méthodes universelles. Pour cela ils ont fait intervenir le caractère « parcimonieux» ou « sparse » de la représentation du signal dans une base de fonctions appropriées. Dans ce domaine, les articles concernent essentiellement les signaux audio décomposés sur une base (ou plutôt un dictionnaire) de Weyl-Heisenberg que l'on obtient pratiquement au moyen d'une transformée de Fourier discrète pondérée sur un horizon temporel limité (Short Time Fourier Transform). Jusqu'à environ 2005, les études ont porté presque exclusivement sur des situations où le « degré de parcimonie » est tel que chaque source se dévoile seule (donc sans mélange), dans la plupart des composantes de la base parcimonieuse dont il a été question ci-dessus.

Le problème se simplifie alors considérablement, et il suffit d'associer par clustering les mesures vectorielles délivrées par le capteur correspondant à une même source pour obtenir le vecteur directionnel de chaque source, filtré sur le cluster qui lui correspond. Cela est expliqué dans de nombreux articles ou thèses dont [7] "Survey of sparse and non sparse methods in source séparation", P.D. O'Grady, B.A. Pearlmutter, S.T. Richard, International Journal of Imaging systems and Technologies, Special Issue 15(1), 2005 ou [8] « Estimation robuste et apprentissage aveugle de modèles pour la séparation de sources sonores », S. Arberet, Thèse de l'université de Rennes I, 17/12/2008.

Par la suite, on a cherché à améliorer la précision du vecteur directionnel dans le cas où une source peut être mélangée avec d'autres sources de niveau moindre mais où il y a toujours une source prépondérante par rapport aux autres. L'ensemble des contributions est modélisé par un processus aléatoire gaussien centré de covariance connue ou inconnue. Le nouveau traitement de clustering et filtrage consiste alors à tenir compte de cette covariance si elle est connue ou de son estimée. Cela est expliqué dans [9] "Undetermined reverberant audio source separation using a full rank spatial covariance model", N.Q.K. Duong, E. Vincent, R. Gribonval, IEEE Audio, Speech and Language Processing, sept 2010, pp 1830-1840 ou [10] "Contribution à la séparation de sources et à la description des contenus audio", Habilitation à diriger des recherches, E. Vincent, Université de Rennes I, 23/11/2012 qui est un point d'entrée récent pour ce domaine de recherche.

Les méthodes à l'ordre 2 ou les méthodes utilisant les statistiques d'ordre supérieur, traitent un nombre de sources qui est limité par le nombre de capteurs.

Cela provient du fait que ces méthodes ne font aucune hypothèse sur la structure temporelle ou spectrale des signaux interceptés. Implicitement, ces traitements sont établis en faisant l'hypothèse que les signaux sont permanents et occupent toute la bande d'analyse.

Les méthodes parcimonieuses traitent un nombre de sources quelconque, mais sous l'hypothèse que localement une seule source est prépondérante par rapport aux autres.

L'invention a pour but de proposer un procédé permettant de traiter un nombre de sources supérieur au nombre de capteurs disponibles dans le cas où le degré de parcimonie des sources est tel que le nombre de sources présentes localement est égal à 1 ou 2. Plus précisément, on suppose que la représentation temps/fréquence fait apparaître une proportion non nulle inconnue de composantes nulles, de telle sorte que lorsqu'on prélève les mesures effectuées sur un ensemble de cases temps/fréquence, appelé fenêtre, de taille réduite par rapport à la bande instantanée totale traitée, et par rapport à la durée totale de l'analyse, alors le mélange des signaux est limité à deux signaux. La taille des fenêtres est déterminée pour intercepter au mieux, en moyenne, les signaux d'intérêt, mais ceux-ci sont de durée et de bande variables, et il est donc possible, dans ces conditions, qu'un signal soit « vu» par plusieurs fenêtres, ce qui va éclater en autant de fenêtres l'estimation de la direction d'arrivée. Sur chaque fenêtre, le signal peut être seul, ou mélangé avec un autre signal, qui peut lui-même être « vu » par une ou plusieurs fenêtres. Ainsi, pour avoir une vision plus cohérente de l'environnement il est nécessaire de regrouper les estimations réalisées sur les fenêtres correspondant à un même signal de façon à délivrer, pour un signal donné, une seule information de DOA.

Un procédé selon le préambule de la revendication 1 est connu de EP2857856.

A cet effet, l'invention a pour objet un procédé du type précité comportant les étapes suivantes :

> a) calculer les Transformées de Fourier Discrètes successives du signal reçu échantillonné pour obtenir une grille P-vectorielle temps-fréquence du signal ; chaque élément de la grille contenant un vecteur complexe de dimension P appelé mesure, le procédé étant caractérisé en ce qu'il comporte les étapes additionnelles suivantes:
> b) définir un découpage de la grille temps-fréquence, en un ensemble de fenêtres ;
> c) sur chaque fenêtre,
>
>> c1- calculer la matrice de covariance des mesures de cette fenêtre,
>> c2- dénombrer les sources pour identifier une fenêtre monosource ou bisources,
>> c3- déterminer la ou les deux plus grandes valeurs propres, et le ou les deux vecteurs propres associés de la matrice de covariance ;
>
> d) discrétiser le domaine des directions d'arrivée accessibles par le réseau,
> e) générer des vecteurs directionnels pour les directions d'arrivée discrétisées accessibles par le réseau ;
> f) associer les vecteurs directionnels aux fenêtres, par comparaison de la norme du projeté du vecteur directionnel sur le sous-espace vectoriel engendré par le ou les deux vecteurs propres de chaque fenêtre considérée ;
> g) pour chaque ensemble de fenêtres associées à un même vecteur directionnel, obtenir le vecteur directionnel filtré de la source correspondante en calculant le vecteur propre associé à la plus grande valeur propre d'une matrice construite à partir des valeurs propres et vecteurs propres des matrices de covariance desdites fenêtres.

Suivant des modes particuliers de mis en oeuvre, le procédé comporte l'une ou plusieurs des caractéristiques suivantes :

- l'étape f) d'association des vecteurs directionnels aux fenêtres monosource comporte une recherche du maximum en fonction du vecteur directionnel, de la densité de probabilité des mesures pour des fenêtres monosource, sous la contrainte que le module du vecteur directionnel soit égal à 1 ;
- l'étape f) d'association des vecteurs directionnels aux fenêtres monosource, les inconnues représentant l'amplitude complexe du signal après Transformées de Fourier Discrètes sont remplacées par leur estimée au sens du maximum de vraisemblance ;

- l'étape f) d'association des vecteurs directionnels aux fenêtres bisources comporte une recherche du maximum en fonction du vecteur directionnel, de la densité de probabilité des mesures pour des fenêtres bisources, sous la contrainte que le module du vecteur directionnel soit égal à 1 ;
- l'étape f) d'association des vecteurs directionnels aux fenêtres bisources, les inconnues représentant l'amplitude complexe du signal de chaque source après Transformées de Fourier Discrètes sont remplacées par leur estimée au sens du maximum de vraisemblance ;
- pour un réseau bipolarisation, l'étape e) de génération des vecteurs directionnels comporte une estimation des paramètres de polarisation au sens du Maximum de Vraisemblance ;
- pour un réseau bipolarisation, pour chaque direction d'arrivée $\theta$, soit, pour tous les $(H(\theta),V(\theta))$, où $H(\theta)$ (respectivement $V(\theta)$), est la réponse du réseau à une onde polarisée horizontalement (respectivement verticalement), de direction d'arrivée $\theta$, pour chaque fenêtre bisources, on calcule les éléments propres de la matrice

$$M_{bi} = \sum_{l=1}^{2} \begin{pmatrix} \left|W_{lj}^{*}H(\theta)\right|^{2} & \overline{W_{lj}^{*}H(\theta)}W_{lj}^{*}V(\theta) \\ \overline{W_{lj}^{*}V(\theta)}W_{lj}^{*}H(\theta) & \left|W_{lj}^{*}V(\theta)\right|^{2} \end{pmatrix}$$

où $W_{1j}$ est le vecteur propre associé à la plus grande valeur propre de la matrice de covariance de la fenêtre bisources considérée ;

et $W_{2j}$ est le vecteur propre associé à la deuxième plus grande valeur propre de la matrice de covariance de la fenêtre bisources considérée ;

si la valeur propre maximum $\alpha$ de $M_{bi}$ est proche de 1, on associe, à cette fenêtre, le vecteur directionnel $U(\theta,h,v)$ correspondant à la direction $\theta$ et au vecteur de polarisation égal au vecteur propre associé à $\alpha$ ;

si les deux valeurs propres de $M_{bi}$ sont proches de 1, les deux sources ont comme direction angulaire $\theta$ mais leur vecteur de polarisation reste indéterminé ;
et :
pour chaque fenêtre monosource, on calcule les éléments propres de la matrice

$$M_{mono} = \begin{pmatrix} \left|W_{j}^{*}H(\theta)\right|^{2} & \overline{W_{j}^{*}H(\theta)}W_{j}^{*}V(\theta) \\ \overline{W_{j}^{*}V(\theta)}W_{j}^{*}H(\theta) & \left|W_{j}^{*}V(\theta)\right|^{2} \end{pmatrix}$$

où $W_{j}$ est le vecteur propre associé à la plus grande valeur propre de la matrice de covariance de la fenêtre monosource considérée ;

si la valeur propre maximum $a$ de $M_{mono}$ est proche de 1, on associe à cette fenêtre le vecteur directionnel $U(\theta,h,v)$ correspondant à la direction $\theta$ et au vecteur de polarisation égal au vecteur propre associé à $\alpha$ ;

- lorsque le réseau est monopolarisation, pour chaque direction d'arrivée, c'est-à-dire pour chaque $U = U(\theta)$ :

chaque vecteur directionnel est associé ou non à chaque fenêtre monosource par comparaison de $1-\left|W_{j}^{*}U\right|^{2}$ à un seuil, et
chaque vecteur directionnel est associé ou non à chaque fenêtre bisources par comparaison de $1-\left|W_{1j}^{*}U\right|^{2}-\left|W_{2j}^{*}U\right|^{2}$ à un seuil ;

où $W_{j}$ est le vecteur propre associé à la plus grande valeur propre de la matrice de covariance de la fenêtre considérée, lorsque la fenêtre est monosource ;
où $W_{1j}$ est le vecteur propre associé à la plus grande valeur propre de la matrice de covariance de la fenêtre considérée, lorsque la fenêtre est bisources ;
où $W_{2j}$ est le vecteur propre associé à la deuxième plus grande valeur propre de la matrice de covariance de la fenêtre considérée, lorsque la fenêtre est bisources ;
et où les seuils dépendent de la plus grande valeur propre de la matrice de covariance dans le cas monosource, et des deux plus grandes valeurs propres de la matrice de covariance dans le cas bisources ;

- pour un réseau monopolarisation ou bipolarisation, pour estimer un vecteur directionnel filtré :

g1 - on calcule la matrice *CVPP* de covariance des vecteurs propres pondérés de chaque fenêtre de la réunion de l'ensemble des fenêtres monosource et de l'ensemble des fenêtres bisources associées à un même vecteur directionnel ; chaque vecteur propre est pondéré par le rapport signal à bruit de la fenêtre dont il provient ;

$$CVPP = \sum_{j \in J_{1U}} \lambda'_j W_j W_j^* + \sum_{j \in J_{2U}} \frac{\left(\lambda'_{1j} + \lambda'_{2j}\right)}{2} \left(W_{1j} W_{1j}^* + W_{2j} W_{2j}^*\right),$$

où $J_{1U}$ est l'ensemble des fenêtres monosource associées au vecteur directionnel ;

où $J_{2U}$ est l'ensemble des fenêtres bisources associées au vecteur directionnel ;

où $W_j$ est le vecteur propre associé à la plus grande valeur propre $\lambda_j$ de la matrice de covariance de la j$^{ème}$ fenêtre de l'ensemble $J_{1U}$ ;

où $W_{1j}$ est le vecteur propre associé à la plus grande valeur propre $\lambda_{ij}$ de la matrice de covariance de la j$^{ème}$ fenêtre de l'ensemble $J_{2U}$ ;

où $W_{2j}$ est le vecteur propre associé à la deuxième plus grande valeur propre $\lambda_{2j}$ de la matrice de covariance de la j$^{ème}$ fenêtre de l'ensemble $J_{2U}$ ;

où $\lambda'_j$ est égal à $(\lambda_j - 2\sigma^2)/2\sigma^2$;

où $\lambda'_{1j}$ est égal à $(\lambda_{1j} - 2\sigma^2)/2\sigma^2$;

où $\lambda'_{2j}$ est égal à $(\lambda_{2j} - 2\sigma^2)/2\sigma^2$ et

où $2\sigma^2$ est la puissance du bruit.

g2 - on prend pour vecteur directionnel filtré le vecteur propre associé à la plus grande valeur propre de la matrice de covariance des vecteurs propres pondérés *CVPP* ;

L'invention a également pour objet une installation de détermination de la direction d'arrivée, respectivement de la direction d'arrivée et de la polarisation, de signaux issus de plusieurs sources radioélectriques comportant un réseau de capteurs à diversité d'espace monopolarisation, respectivement bipolarisation, composé de P voies de réception avec P> 2 et P pouvant être inférieur au nombre de sources, lorsque le degré de parcimonie des signaux est tel que localement, dans leur représentation temps/fréquence, le nombre de sources présentes est égal à 2 au plus, caractérisée en ce qu'elle comporte des moyens pour la mise en oeuvre d'un procédé tel que défini ci-dessus.

L'invention sera mieux comprise à la lecture de la description qui va suivre, faite en se référant aux dessins, donnés uniquement à titre d'exemple, sur lesquels :

- la figure 1 est un organigramme du procédé tel que mis en oeuvre dans l'invention dans le cas d'un réseau antennaire monopolarisation ;
- la figure 2 est un organigramme du procédé tel que mis en oeuvre dans l'invention dans le cas d'un réseau antennaire bipolarisation ; et
- la figure 3 est un schéma illustrant les grandeurs intervenant dans le calcul de la densité de probabilité des mesures dans le cas bisources.

L'invention est adaptée à la fois aux réseaux antennaires à monopolarisation et aux réseaux antennaires à bipolarisation.

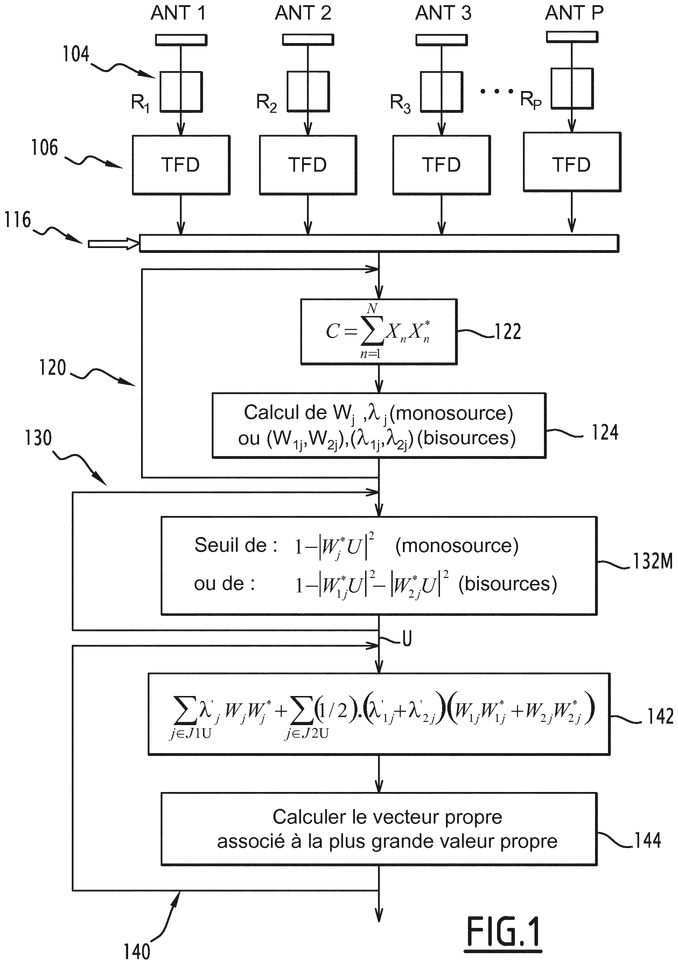

La figure 1 décrit un dispositif de séparation de sources selon un premier mode de réalisation de l'invention appliqué à un réseau antennaire à monopolarisation.

Le dispositif mettant en oeuvre le procédé de séparation de sources selon l'invention décrit à la figure 1 comprend un réseau antennaire composé d'une pluralité d'éléments antennaires ou capteurs $ANT_1$, $ANT_2$, $ANT_3$...$ANT_P$ à monopolarisation. Chaque élément antennaire est couplé à une voie de réception $R_1$, $R_2$, $R_3$...$R_P$ pour, notamment, numériser le signal analogique reçu par chaque capteur.

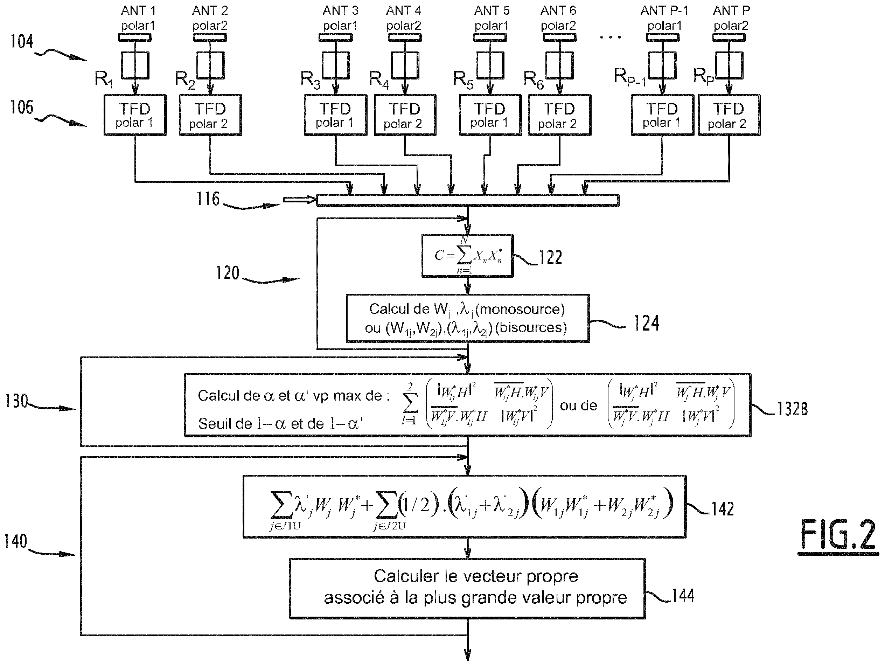

La figure 2 décrit un dispositif de séparation de sources selon un autre mode de réalisation de l'invention appliqué à un réseau antennaire à bipolarisation.

Le dispositif de séparation de sources selon l'invention décrit à la figure 2 comprend une pluralité d'éléments antennaires $ANT_1$, $ANT_2$, $ANT_3$...$ANT_P$ aptes à fonctionner selon deux polarisations distinctes. Chaque élément antennaire est couplé à une voie de réception $R_1$,$R_2$,$R_3$...$R_P$ pour, notamment, numériser le signal analogique reçu par chaque capteur.

Dans différentes variantes de réalisation du dispositif de séparation de sources selon l'invention, les modules de calcul peuvent être agencés selon différentes architectures, en particulier chaque étape du procédé peut être implantée par un module distinct ou au contraire l'ensemble des étapes peut être regroupé au sein d'un module de calcul unique.

Avantageusement, la réception est faite sur un réseau à diversité d'espace (réseau interférométrique) et la démodulation du signal permettant la « descente en bande de base » est effectuée par le même oscillateur local pour toutes les antennes afin d'assurer une cohérence. Le signal reçu est échantillonné en réel ou en complexe (double démodulation en quadrature ou tout autre procédé) sur chaque voie.

Chaque signal échantillonné est passé dans un ou plusieurs bancs de filtre par Transformée de Fourier Discrète (TFD) pondérée qui réalisent une adaptation moyenne à la bande des signaux d'intérêt. On effectue ainsi une succession de TFDs pondérées avec un recouvrement provenant de l'utilisation d'une pondération. A l'issue de cette opération, appelée analyse temps-fréquence, le signal est transformé en une grille temps-fréquence. Chaque case de la grille contient un vecteur complexe qui est le résultat des Transformées de Fourier Discrètes pour toutes les voies, pour un intervalle temporel et un intervalle fréquentiel donné.

Plus précisément, le signal reçu, filtré dans une bande de typiquement plusieurs centaines de MHz, est modélisé par : $s_0(t)e^{i2\pi f0t}$. Ce modèle ne fait pas d'hypothèse sur le type de modulation.

Ce signal est échantillonné à une cadence Te telle que 1/Te >> 2 x bande du signal utile, lors de l'étape 104.

On calcule, à l'étape 106, les TFD pondérées et recouvrantes de ce signal sur $N_{TFD}$ points. La pondération a pour rôle de réduire les lobes secondaires. Comme cette pondération induit une variation de la contribution des données à la TFD (les données au centre du support temporel de la TFD se voyant attribuer un poids beaucoup plus important que les données sur les bords du support), qui peut aller jusqu'à une perte des signaux courts, on prend l'hypothèse d'un recouvrement des supports temporels (typiquement ½).

Pour les fréquences des signaux et les distances qui interviennent ici, on peut considérer que le front d'onde est plan. Donc les antennes reçoivent le signal avec une différence de phase fonction des deux angles entre le plan d'onde et le plan des antennes.

Dans le cas monosource, les mesures recueillies sur le réseau complet s'écrivent donc comme :

$$X_n = s_n U + B_n$$

- $X_n$ représente les mesures : $X_n$ est un vecteur colonne complexe de dimension P, où P est le nombre de voies de réception et n = 1,2, ... N, est un double indice (l,c) parcourant l'espace des temps (indice de la transformée de Fourier) et des fréquences (numéro de canal pour une transformée de Fourier). Plus précisément, l'indice n parcourt les cases d'une fenêtre rectangulaire temporelle x fréquentielle de taille N. Les indices l et c correspondent aux numéros de ligne et de colonne des cases de la fenêtre.
- $S_n$ est un nombre complexe représentant le signal après TFD
- $B_n$ est le bruit thermique dans la case temps/fréquence d'indice n. $B_n$ est un vecteur colonne de dimension le nombre de voies de réception P. $B_n$ est gaussien sur ses composantes réelle et imaginaire, indépendant d'une case temps/fréquence à l'autre et indépendant d'une voie à l'autre. Autrement dit, $B_n$ est blanc spatialement, fréquentiellement et temporellement. L'écart type du bruit compté sur chaque composante réelle ou imaginaire, au niveau d'une case temps/fréquence, est égal à $\sigma$. Pour que l'hypothèse d'indépendance du bruit d'une case à l'autre soit vérifiée, on limite le recouvrement des TFD à 50%.
- Dans le cas d'un réseau interférométrique monopolarisation, le vecteur directionnel $U$ s'écrit sous la forme :

$$U = g \begin{pmatrix} u_1 \\ ... \\ u_P \end{pmatrix},$$

- où $g$ est un scalaire complexe dépendant de la polarisation, de la fréquence $f$ et de la direction d'arrivée $\theta$ de l'onde incidente, et où les $u_i$ sont des nombres complexes de module 1 représentant les déphasages géométriques associés à la direction de l'onde incidente. On peut choisir comme référence de phase une des antennes du récepteur.
- Dans le cas d'un réseau interférométrique bipolarisation, $U$ s'écrit sous la forme : $U = hH + vV$,

où $h$ et $v$ sont des scalaires complexes tels que $|h|^2 + |v|^2 = 1$ qui expriment la polarisation de l'onde incidente, et où $H$ (respectivement $V$) est la réponse du réseau à une onde polarisée horizontalement (respectivement verticalement), $H$ et $V$ ne dépendant que de la direction d'arrivée $\theta$ et de la fréquence $f$ de l'onde incidente.

Dans les deux cas, on peut considérer que $U$ est normé, et que $s_n$ porte la puissance du signal et le gain moyen du réseau.

De plus, on suppose que les variations de $U, H, V$ sont négligeables sur la bande de fréquence analysée.

Dans le cas monopolarisation, $U$ ne dépend donc plus que de la direction d'arrivée du signal, et dans le cas bipolarisation, $U$ ne dépend plus que de la direction d'arrivée et de la polarisation du signal.

Dans la suite du texte, pour alléger les écritures, on utilisera la notation $U$ sans préciser systématiquement les dépendances en $\theta, h, v$.

U est de dimension le nombre de voies de réception P.

$U$ est conservé par la TFD qui est une transformation linéaire, et se retrouve sur le signal en sortie de TFD.

Dans le cas général il peut y avoir un mélange de K signaux (K étant éventuellement supérieur à la résolution du réseau). Le signal s'écrit alors :

$$X_n = \sum_{k=1}^{K} s_k(n)U_k + B_n \; ; \text{n=1,2,...N}$$

*Equation 1 Expression d'un mélange de signal*

L'hypothèse fondamentale est que compte tenu de la structure des signaux (limités en temps, en bande ou en temps et en bande), la complexité locale d'un mélange est limitée à deux signaux.

A l'étape 116, on définit un découpage de la grille temps/fréquence en un ensemble de fenêtres de taille fixe prédéterminée pour se mettre dans le cadre de cette hypothèse.

Pour un ensemble des N cases temps/fréquence restreint à une fenêtre d'indice j, le modèle devient :

$$X_{jn} = s_{j1}(n)U_{j1} + s_{j2}(n)U_{j2} + B_n$$

*Equation 2 Expression d'un mélange de 2 signaux dans une fenêtre*

Au cours d'une première boucle 120, on examine toutes les fenêtres successivement pour calculer pour chacune d'elles, la matrice de covariance $C$ des mesures à l'étape 122, puis pour chaque fenêtre j, à l'étape 124, on diagonalise totalement ou partiellement la matrice $C$, et on effectue le dénombrement des sources en appliquant une des nombreuses méthodes décrites par exemple dans [11] M. Wax and T. Kailah, « Détection of signals by information theoretic criteria », IEEE Trans. Acoust., Speech, Signal Process., vol. 33 no. 2, pp 387-392, apr. 1985, ou plus récemment dans [12] S. Kritchman and B. Nadler, Non-Parametric Détection of the Number of Signals : Hypothesis Testing and Random Matrix Theory", IEEE Trans. On Signal Process., vol. 57 no. 10, oct 2009.

En situation monosource, la valeur propre $\lambda_j$ maximale et le vecteur propre $W_j$ associé sont conservés et en situation bisources, les deux valeurs propres $\lambda_{1j}, \lambda_{2j}$ maximales et les deux vecteurs propres $W_{1j}, W_{2j}$ associés sont conservés.

En particularisant le vecteur directionnel $U$, on peut écrire pour les mesures extraites de la fenêtre monosource j :

$$X_{jn} = \varepsilon_j s_n U + (1 - \varepsilon_j) e_n L_j + B_{jn}$$

*Equation 3 Expression d'un mélange de signal dans une fenêtre*

où les $\varepsilon_j$ sont des variables aléatoires indépendantes prenant les valeurs 1 ou 0 avec les probabilités $r$ et $1 - r$, ce qui traduit la proportion de fenêtres correspondant au vecteur directionnel $U$. $L_j$ est un vecteur directionnel que l'on considère comme aléatoire équiréparti sur son ensemble de définition.

La densité de probabilité des mesures $X_{jn}$ pour un j donné, s'écrit :

$$p(X_{j1},...,X_{jn},...,X_{jN}) = rK \exp\left(-\frac{1}{2\sigma^2}\sum_n \|X_{jn} - s_n U\|^2\right) + (1-r)/A$$

où K et A sont des constantes,

*Equation 4 Densité de probabilité des mesures dans le cas monosource* que l'on notera $p(X_{jn})$ pour alléger les écritures.

Pour les traitements qui suivent, il est avantageux d'écrire $\sum_n \|X_{jn} - s_n U\|^2$ sous une forme qui fait apparaître les données extraites pour chaque fenêtre j : les éléments propres de la matrice de covariance $\sum_n X_{jn} X_{jn}^*$ où X* est la transposée conjuguée de X.

Pour simplifier, on n'écrira plus l'indice j.

$$\sum_n \|X_n - s_n U\|^2 = \sum_n |s_n - U^* X_n|^2 + \sum_n \|X_n\|^2 - U^* \sum_n X_n X_n^* U$$

Soient $W_k, \lambda_k$ les éléments propres rangés par ordre décroissant en $\lambda_k$ de la matrice de covariance. On a :

$$\sum \|X_n\|^2 = tr\left(\sum X_n X_n^*\right) = \sum \lambda_k \text{ et } U^* \sum X_n X_n^* U = \sum \lambda_k |W_k^* U|^2$$

Par ailleurs, en situation monosource : $\lambda_1 \gg \lambda_2 \approx \lambda_{34} \approx ... \approx \lambda_p = 2\sigma^2$

Et donc :

$$\sum \|X_n\|^2 - U^* \sum X_n X_n^* U = \sum_k \lambda_k \left(1 - |W_k^* U|^2\right) \approx \lambda_1 \left[1 - |W_1^* U|^2\right] + 2\sigma^2 \sum_{k=2}^{P}\left[1 - |W_k^* U|^2\right]$$

Comme $W_k, k = 1...P$ forment une base orthonormée et que $\|U\|^2 = 1$, on a :

$$\sum_{k=2}^{P}\left[1 - |W_k^* U|^2\right] = P - 1 - \left(1 - |W_1^* U|^2\right).$$

Finalement on obtient :

$$\sum \|X_n\|^2 - U^* \sum X_n X_n^* U = \left(\lambda_1 - 2\sigma^2\right)\left(1 - |W_1^* U|^2\right) + 2(P-1)\sigma^2 .$$

Et:

$$-\frac{1}{2\sigma^2}\sum_n \left\| X_n - s_n U \right\|^2 = -\frac{1}{2\sigma^2}\sum \left| s_n - U^* X_n \right|^2 - \frac{\lambda_1 - 2\sigma^2}{2\sigma^2}\left(1 - \left| W_1^* U \right|^2\right) - (P-1)$$

*Equation 5 Argument de l'exponentielle de la densité de probabilité monosource*

Pour un ensemble des fenêtres monosource $J_1$, la densité des mesures est $\prod_{j=1}^{cardJ_1} p(X_{jn})$ où l'argument de l'exponentielle a la forme de l'Equation 5

*Equation 6 Densité de probabilité des mesures pour une famille de fenêtres monosource*

De même que dans le modèle des signaux pour une fenêtre monosource, en particularisant le vecteur directionnel $U$, on peut écrire, pour une fenêtre bisources :

$$X_{jn} = \varepsilon_j \left[ s_n U + c_n Y_j \right] + (1 - \varepsilon_j)\left[ d_n L_j + e_n K_j \right] + B_{jn}$$

*Equation 7 Expression des mesures en bi sources*

Comme dans le modèle des signaux sur un ensemble de fenêtres monosource, les $\varepsilon_j$ sont des variables aléatoires indépendantes prenant les valeurs 1 ou 0 avec les probabilités $\rho$ et 1 - $\rho$.

La densité de probabilité de $X_{jn}$ pour j fixé est :

$$p\left( X_{j1},..., X_{jn},... X_{jN} \right) = \rho K \exp\left( -\frac{1}{2\sigma^2}\sum_n \left\| X_{jn} - s_n U - c_n Y_j \right\|^2 \right) + (1-\rho)/A$$

*Equation 8 Densité de probabilité des mesures dans le cas bi sources*

que l'on notera $p(X_{jn})$ pour alléger les écritures.

On note l'analogie avec le cas monosource (Equation 4).

Les paramètres d'intérêt sont : $U, Y_j, s_n, c_n$.

De l'indépendance en j, on déduit la densité pour une famille de fenêtres bisources $J_2$:

$$\prod_{j=1}^{cardJ_2} p\left( X_{jn} \right)$$

*Equation 9 Densité de probabilité des mesures pour une famille de fenêtres bisources*

Comme dans le modèle des signaux sur un ensemble de fenêtres monosource, on a intérêt à présenter l'écriture de la densité de *l'Equation 8* sous une forme qui fait apparaître les éléments propres principaux de la matrice de covariance de $X_{jn}$. Comme précédemment on omet l'indice j.

Nous posons : $S_n = (s_n c_n)^T$ et $M = (U\ Y)$.

On a:

$$\sum_{n=1}^{N} \left\| X_n - s_n U - c_n Y \right\|^2 = \sum_{n=1}^{N} \left\| X_n - M S_n \right\|^2 = \sum_n \left\| X_n \right\|^2 + S_n^* M^* M S_n - S_n^* M^* X_n - X_n^* M S_n$$

On note que M*M est une matrice 2x2 inversible puisque $U, Y$ sont indépendants (2 sources dans des directions distinctes sans ambiguïté monosource). L'expression précédente peut alors être réécrite sous la forme :

$$\sum_n \left\| X_n \right\|^2 + \left(S_n - \left(M^*M\right)^{-1}M^*X_n\right)^* M^*M\left(S_n - \left(M^*M\right)^{-1}M^*X_n\right) - \sum_n X_n^*M\left(M^*M\right)^{-1}M^*X_n$$

*Equation 10  Argument de l'exponentielle de la densité de probabilité bisources*

Le premier terme peut être transformé en utilisant les éléments propres de la matrice de covariance sur la fenêtre j :

$$\sum_n \left\| X_n \right\|^2 = tr \sum_n X_n X_n^* = \sum_{k=1}^P \lambda_k = \lambda_1 + \lambda_2 + (P-2)2\sigma^2 = \left(\lambda_1 - 2\sigma^2\right) + \left(\lambda_2 - 2\sigma^2\right) + P.2\sigma^2$$

*Equation 11  Transformation du 1$^{er}$ terme de l'exposant de la densité de probabilité*

On laisse le deuxième terme inchangé.

En exploitant le fait que $M(M^*M)^{-1}M^*$ est le projecteur sur le sous-espace engendré par $U$ et Y, on trouve que le troisième terme peut également être transformé. Après modification, on obtient :

$$\sum_n X_n^*M\left(M^*M\right)^{-1}M^*X = \left(\lambda_1 - 2\sigma^2\right)\left|W_1^*U\right|^2 + \left(\lambda_2 - 2\sigma^2\right)\left|W_2^*U\right|^2 + \left(\lambda_1 - 2\sigma^2\right)\left|W_1^*Z\right|^2 + \left(\lambda_2 - 2\sigma^2\right)\left|W_2^*Z\right|^2 + 4\sigma^2$$

*Equation 12  Transformation du 3$^{ème}$ terme de l'exposant de la densité de probabilité*

où Z est tel que : $Z = \alpha U + \beta Y$ avec $\alpha + \beta U^*Y = 0$ et $|\alpha|^2 + |\beta|^2 + \alpha\overline{\beta}V^*U + \overline{\alpha}\beta U^*Y = 1$.

L'exposant du terme exponentiel s'écrit donc :

$$
\begin{aligned}
\arg(\exp) \quad = &-\frac{\lambda_1 - 2\sigma^2}{2\sigma^2}\left(1 - \left|W_1^*U\right|^2\right) - \frac{\lambda_2 - 2\sigma^2}{2\sigma^2}\left(1 - \left|W_2^*U\right|^2\right) \\
&+\frac{\lambda_1 - 2\sigma^2}{2\sigma^2}\left|W_1^*Z\right|^2 + \frac{\lambda_2 - 2\sigma^2}{2\sigma^2}\left|W_2^*Z\right|^2 \\
&-\sum_n \left(S_n - \left(M^*M\right)^{-1}M^*X_n\right)^* M^*M\left(S_n - \left(M^*M\right)^{-1}M^*X_n\right)/2\sigma^2 \\
&-(P-2)
\end{aligned}
$$

*Equation 13 Argument de l'exposant du terme exponentiel de la densité de probabilité*

Lors d'une boucle 130, effectuée sur tous les directions d'arrivée $\theta$ et sur toutes les fenêtres, une étape 132 d'association des fenêtres aux vecteurs directionnels $U$ est effectuée, ceci afin de regrouper ensemble les fenêtres (qu'elles soient monosource ou bisources) correspondant à une même source.

Pour ce faire, les modèles de signaux mesurés en situation monosource et bisources font intervenir des inconnues relatives à la DOA et à la polarisation des sources par l'intermédiaire des vecteurs directionnels $U$ et des inconnues relatives aux formes d'onde.

On cherche à définir un estimateur performant des vecteurs directionnels en considérant $s_n$ et $c_n$ comme des paramètres nuisibles du modèle. Comme on dispose d'un grand nombre de mesures pour $U$, et qu'on n'a pas d'information a priori sur $U$ (sauf la structure de ce type de vecteur), on utilise avantageusement le Maximum de Vraisemblance (MV).

Pour éliminer $s_n$ et $c_n$ on va les remplacer avantageusement par leur estimée au sens du Maximum de Vraisemblance rendue calculable grâce à la transformation de la densité de probabilité des mesures qui a été opérée dans le modèle statistique des signaux.

Dans le cas de fenêtres monosource, la densité de probabilité de l'ensemble des mesures $X_{jn}$ s'obtient par les Equation 4, Equation 5, Equation 6.

$$\prod_j p\big(X_{jn}\big) = \prod_j \left\{ rK' \exp\left( -\frac{1}{2\sigma^2} \sum_n \left|s_{jn} - U^* X_{jn}\right|^2 - \frac{\lambda_j - 2\sigma^2}{2\sigma^2}\left(1 - \left|W_j^* U\right|^2\right)\right) + (1-r)/C \right\}$$

*Equation 14 Equation de la densité de probabilité*

où *K'= K* exp(1-*P*) et où $\lambda_j$ est la plus grande valeur propre extraite de la matrice de covariance de la fenêtre d'indice j, et où *W$_j$* est le vecteur propre associé à cette valeur propre.

L'association ou regroupement des fenêtres revient à définir les indices j des fenêtres correspondant au vecteur directionnel *U* et, au passage, à estimer *U.*

De façon générale, on dispose d'un grand nombre de mesures pour estimer *U*, et il est donc avantageux d'utiliser le maximum de vraisemblance. Cependant, d'autres paramètres que *U* interviennent dans l'expression de la densité (Equation 14) : ce sont le signal *s$_n$* et *r*.

Dans la suite, on verra que des approximations simples et justifiées permettent de se passer de la connaissance de *r*. Quant à *s$_n$* qui apparaît comme un paramètre « nuisible » pour l'estimation de *U*, on l'élimine en le remplaçant par son estimée au sens du Maximum de Vraisemblance. Cela revient à effectuer l'estimation conjointe de *s$_n$, U* par le maximum de vraisemblance. De ces estimations, on ne conserve ici que celle de *U*.

Le travail de modélisation et de transformation de la densité de probabilité développé dans le modèle des signaux sur un ensemble de fenêtres monosource, trouve son application ici. En effet, sous la forme de l'Equation 14,

$$\prod_j p\big(X_{jn}\big)$$

il est facile de voir que maximiser en *s$_{jn}$* revient à remplacer *s$_{jn}$* par *U\*X$_{jn}$*. Le critère à maximiser pour estimer *U* est donc :

$$\underset{s_{jn}}{Max}\ \prod_{j=1}^{cardJ_1} p\big(X_{jn}\big).$$

*Equation 15 Critère sur U*

Pour tenir compte de la contrainte $\|U\|^2 = 1$, on forme l'expression suivante avec $\alpha$ le paramètre de Lagrange :

$$\underset{s_{jn}}{Max}\ \prod_{j=1}^{cardJ_1} p\big(X_{jn}\big) - \alpha\big(\|U\|^2 - 1\big)$$

*Equation 16 Critère sur U avec contrainte de normalisation*

Après avoir pris le logarithme et après avoir dérivé par rapport à *U\**, on trouve l'équation du maximum de vraisemblance pour l'estimée de *U* :

$$\sum_{j=1}^{cardJ_1} \frac{-\dfrac{rK'}{2\sigma^2}\big(\lambda_j - 2\sigma^2\big)\big(W_j W_j^* U\big)\exp(...)}{rK'\exp(\ ) + (1-r)/c} - \alpha U = 0$$

$$\text{où}\ \exp(...) = \exp\left(-\frac{\lambda_j - 2\sigma^2}{2\sigma^2}\big(1 - \left|W_j U\right|^2\big)\right)$$

*Equation 17 Equation pour U*

Il y a deux difficultés pour résoudre l'Equation 17. La première est sa forme très non linéaire en *U*, la seconde est que généralement il y a plusieurs solutions puisqu'il y a plusieurs sources présentes lorsqu'on considère un grand nombre de fenêtres.

La forme de exp(...) et le fait que $(\lambda_j\text{-}2\sigma^2)/2\sigma^2$, qui est égal au rapport signal à bruit après formation de faisceau dans la direction de la source, est un nombre élevé (> 20 dB) vont permettre de trouver le traitement d'estimation des $U$.

Remarquons que l'on peut regrouper les $U$ en plusieurs catégories :

1) Les $U$ tels que pour tout $j :\ 1-\left|W_j^* U\right|^2 > seuil$ de sorte que pour un tel $U$, l'argument de l'exponentielle dans l'expression de la densité de probabilité est toujours grand en valeur absolue, et négatif.

2) Les $U$ auxquels on peut associer un ensemble de $W_j$ tels que :

$$1-\left|W_j^* U\right|^2 < seuil$$

*Equation 18 Test d'association d'un vecteur directionnel avec une fenêtre monosource*

de sorte que exp(...) ait une valeur significative ($\approx$1) alors que pour le sous-ensemble complémentaire des $W_j$ *on* ait exp(...) $\approx$ 0. Soit $J_{1U}$ le sous-ensemble de $J_1$ ayant cette propriété.

Le critère (Equation 15) vaut alors :

$$\underset{s_{jn}}{Max}\prod_j p(x_{jn}) =\left[rK'+(1-r)/C\right]^{cardJ_{1U}} \left[(1-r)/C\right]^{cardJ_1-cardJ_{1U}}$$

On en déduit que les $U$ conduisant à des maxima locaux de la fonction $cardJ_{1U}$ sont les estimées recherchées. Dans la pratique, on envisage un ensemble discret de valeurs $\theta$, en chaque point $U(\theta)$ on recense le cardinal de l'ensemble $J_{1U}$ des fenêtres dont les vecteurs propres $W_j$ sont tels que $1\text{-}|W_jU|^2 < seuil$ et on trouve ainsi des valeurs approchées des estimées recherchées.

Pour trouver l'estimée de $U$ au voisinage d'un maximum local on utilise l'Equation 17 pour $j \in J_{1U}$ qui, grâce à $rK' >> (1\text{-}r)/C$ se simplifie en :

$$U \ \text{solution de :} \sum_{j\in J_{1U}} \left(\frac{\lambda_j - 2\sigma^2}{2\sigma^2}\right) W_j W_j^* U + \alpha U = 0$$

*Equation 19 Equation pour U*

On appellera $\hat{U}$ une solution de cette équation en $U$. $\hat{U}$ est vecteur propre de la matrice hermitienne positive

$$\sum_{j\in J_{1U}} \frac{(\lambda_j - 2\sigma^2)}{2\sigma^2}.W_j W_j^* .$$

En posant $\lambda'_j = (\lambda_j - 2\sigma^2)/2\sigma^2$, on obtient :

$\hat{U}$ est vecteur propre de la matrice hermitienne définie positive $CVPP_{mono} = \sum_{j\in J_{1U}} \lambda'_j.W_j W_j^*$

*Equation 20 Matrice à diagonaliser pour obtenir U dans le cas monosource*

On montre en définitive que $\hat{U}$ est le vecteur propre associé à la plus grande valeur propre de cette matrice positive, de façon à maximiser le critère de l'Equation 15.

Pour le cas de fenêtres bisources, une méthode semblable au cas monosource est appliquée pour les paramètres $M = (U,V)$ et $S_n = (s_n,c_n)^T$ à partir du modèle des mesures (Equation 8) et de sa transformation (Equation 13).

$S_n$ est remplacée par son estimée au sens du maximum de vraisemblance comme précédemment. Outre les complications dues à la dimension 2 pour $S_n$, une nouvelle difficulté apparaît à savoir la présence de $Z$ (dans l'Equation 13) qui est un nouveau paramètre à estimer, sachant que $\|Z\| = 1$ et que $Z$ est orthogonal à $U$. On propose de le remplacer par son estimée au sens du maximum de vraisemblance.

L'estimation de $Z$ au sens du Maximum de Vraisemblance dans la densité de l'Equation 13 demande de maximiser :

$$C = \left(\lambda_1^2 - 2\sigma^2\right)\left|W_1^* Z\right|^2 + \left(\lambda_2^2 - 2\sigma^2\right)\left|W_2^* Z\right|^2$$

*Equation 21 Expression à maximiser pour estimer Z au sens du MV*

De Z normé, $\lambda_1^2 > 2\sigma^2$, $\lambda_2^2 > 2\sigma^2$, on déduit :

$$C \le \left(\lambda_1^2 - 2\sigma^2\right)\left|W_1^* Z\right|^2 + \left(\lambda_2^2 - 2\sigma^2\right)\left|1 - W_1^* Z\right|^2 \operatorname{car} \left|W_1^* Z\right|^2 + \left|W_2^* Z\right|^2 \le 1$$

De cette majoration, on déduit que $Z$ optimal est une combinaison linéaire de $W_1, W_2$.

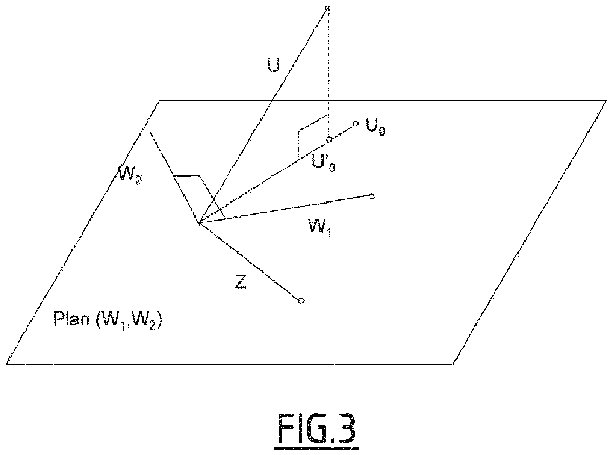

Comme, de plus, $Z$ est orthogonal à $U$, $Z$ est donc le vecteur unitaire de la droite intersection du plan $W_1, W_2$ avec le plan orthogonal à $U$, comme illustré sur la figure 3.

L'Equation 13 s'écrit, en posant $\lambda_1^{'} = \dfrac{\lambda_1 - 2\sigma^2}{2\sigma^2}$, $\lambda_2^{'} = \dfrac{\lambda_2 - 2\sigma^2}{2\sigma^2}$ :

$$\begin{aligned}
E = \arg(\exp) \quad &= -\lambda_1^{'}\left(1 - \left|W_1^* U\right|^2 - \left|W_1^* Z\right|^2\right) - \lambda_2^{'}\left(1 - \left|W_2^* U\right|^2 - \left|W_2^* Z\right|^2\right) \\
&\quad - \sum_n \left(S_n - \left(M^* M\right)^{-1} M^* X_n\right)^* M^* M \left(S_n - \left(M^* M\right)^{-1} M^* X_n\right)/2\sigma^2 \\
&\quad - (P - 2)
\end{aligned}$$

soit $U_0$ le vecteur unitaire de la projection de $U$ sur le plan $(W_1, W_2)$. $U_0$ est orthogonal à $Z$. On a alors :

$$1 - \left|W_1^* U\right|^2 - \left|W_1^* Z\right|^2 = 1 - \left|W_1^* U_0\right|^2 \cdot \left|U^* U_0\right|^2 - \left|W_1^* Z\right|^2$$

En effet, si on introduit $U_0^{'}$ le projeté orthogonal de $U$ sur le plan $(W_1, W_2)$ alors on a la relation $\left|W_1^* U\right|^2 = \left|W_1^* U_0^{'}\right|^2$

Et d'autre part : $\left|W_1^* U_0^{'}\right|^2 = \left\|W_1\right\|^2 \left\|U_0^{'}\right\|^2 \cos(W_1, U_0^{'}) = \left\|W_1\right\|^2 \left\|U_0^{'}\right\|^2$ car $U_0$ et $U_0^{'}$ sont colinéaires

$$\left|W_1^* U_0^{'}\right|^2 = \left\|W_1\right\|^2 \cdot \left\|U_0^{'}\right\|^2 \cdot \cos(W_1, U_0) \cdot \left\|U_0\right\|^4 \operatorname{car} \left\|U_0\right\| = 1$$

Qu'on réécrit en :

$$\left|W_1^* U_0^{'}\right|^2 = \left(\left\|W_1^*\right\|^2 \left\|U_0\right\|^2 \left\|U_0^{'}\right\|^2 \cos(W_1,U_0)\right)\left(\left\|U_0\right\|^2 \left\|U_0^{'}\right\|^2\right) = \left|W_1^* U_0\right|^2 . \left|U^* U_0\right|^2$$

En ajoutant et en retranchant $\left|W_1^* U_0\right|^2$ on obtient :

$$1-\left|W_1^* U\right|^2 - \left|W_1^* Z\right|^2 = 1 - \left|W_1^* U_0\right|^2 - \left|W_1^* Z\right|^2 + \left|W_1^* U_0\right|^2\left(1-\left|U^* U_0\right|^2\right)$$

$$1-\left|W_1^* U\right|^2 - \left|W_1^* Z\right|^2 = \left|W_1^* U_0\right|^2\left(1-\left|U^* U_0\right|^2\right)$$

ce qui entraîne : car, $U_0$ et $Z$ formant une base orthonormée du plan $(U_0,Z)$, et $W_1$ étant un vecteur unitaire de ce plan, on peut l'exprimer dans cette base. Sa norme, exprimée dans cette base, vaut 1 puisque $W_1$ est normé, et elle est égale à $\left|W_1^* U_0\right|^2 + \left|W_1^* Z\right|^2$.

On a le même résultat avec $W_2$ (dans le deuxième terme de E).

Par ailleurs, on a : $\left|U^* U_0\right|^2 = \left|W_1^* U\right|^2 + \left|W_2^* U\right|^2$ puisque $W_1$ et $W_2$ forment une base orthonormée du plan $(W_1,W_2)$. Finalement, E s'écrit :

$$\begin{aligned}E = \arg(\exp) \quad &= -\left[1-\left|W_1^* U\right|^2 - \left|W_2^* U\right|^2\right]\left[\lambda_1^{'}\left|W_1^* U_0\right|^2 + \lambda_2^{'}\left|W_2^* U_0\right|^2\right] \\ &\quad - \sum_n \left(S_n - \left(M^* M\right)^{-1} M^* X_n\right)^* M^* M\left(S_n - \left(M^* M\right)^{-1} M^* X_n\right)/2\sigma^2 \\ &\quad -(P-2)\end{aligned}$$

*Equation 22 Expression de l'argument de l'exponentielle de la densité de probabilité*

Le terme « sensible » concernant le vecteur directionnel $U$ dans E est $1-\left|W_1^* U\right|^2 - \left|W_2^* U\right|^2$ qui exprime la distance au carré de $U$ au plan $(W_1,W_2)$. Dès que cette distance au carré est supérieure à un seuil, et multipliée par le terme $\lambda_1^{'}(\ ) + \lambda_2^{'}(\ )$ avec $\lambda_1^{'} \gg 1, \lambda_2^{'} \gg 1$, on a exp($E$) = 0, sauf si $U$ est orthogonal au plan $(W_1,W_2)$ (car alors $U_0$ est nul et l'argument de l'exponentielle est nul aussi), mais ce cas ne se produit pas en pratique.

La densité de probabilité $p(X_{jn})$ s'écrit en réintégrant l'indice j pour les éléments propres :

$$\begin{aligned}p(X_{jn}) \quad &= \rho K'' \exp\left[-\frac{1}{2}\sum_n \left(S_{jn} - \left(M^* M\right)^{-1} M^* X_{jn}\right)^* M^* M\left(S_{jn} - \left(M^* M\right)^{-1} M^* X_{jn}\right)\right] \\ &\quad \times \exp\left[-\left(1-\left|W_{1j}^* U\right|^2 - \left|W_{2j}^* U\right|^2\right)\left(\lambda_{1j}^{'}\left|W_{1j}^* U_0\right|^2 + \lambda_{2j}^{'}\left|W_{2j}^* U_0\right|^2\right)\right] \\ &\quad + (1-\rho)/C\end{aligned}$$

avec $K'' = K \exp(-P+2)$

*Equation 23 Expression de l'argument de l'exponentielle de la densité de probabilité*

L'expression de la densité de probabilité pour l'ensemble des fenêtres bisources est donnée par l'Equation 9.

Après remplacement de $S_n$ par $(M^*M)^{-1}M^*X_n$, on obtient :

$$p(X_{jn}) = \rho K'' \times \exp\left[-\left(1 - \left|W_{1j}^* U\right|^2 - \left|W_{2j}^* U\right|^2\right)\left(\lambda'_{1j}\left|W_{1j}^* U_0\right|^2 + \lambda'_{2j}\left|W_{2j}^* U_0\right|^2\right)\right] + (1-\rho)/C$$

avec $K'' = K\exp(-P+2)$

On peut considérer qu'on a toujours $\rho K'' >> (1-\rho)/C$.

L'expression du Maximum de Vraisemblance de $U$ à partir du produit (sur j) des densités $p(X_{jn})$ fait intervenir une dérivation par rapport à $U$ de $\lambda'_{1j}\left|W_{1j}^* U_0\right|^2 + \lambda'_{2j}\left|W_{2j}^* U_0\right|^2$ mais ce terme est multiplié par $1 - \left|W_{1j}^* U\right|^2 - \left|W_{2j}^* U\right|^2$ qui est proche de 0 pour que la fenêtre j soit prise en compte lorsqu'on travaille avec le vecteur $U$. Nous n'écrivons donc pas non plus ce terme.

De plus :

$$\lambda'_{2j}\left(\left|W_{1j}^* U_0\right|^2 + \left|W_{2j}^* U_0\right|^2\right) \leq \lambda'_{1j}\left|W_{1j}^* U_0\right|^2 + \lambda'_{2j}\left|W_{2j}^* U_0\right|^2 \leq \lambda'_{1j}\left(\left|W_{1j}^* U_0\right|^2 + \left|W_{2j}^* U_0\right|^2\right)$$

Or, lorsque $1 - \left|W_{1j}^* U\right|^2 - \left|W_{2j}^* U\right|^2 \approx 0$ on a aussi $\left|W_{1j}^* U_0\right|^2 + \left|W_{2j}^* U_0\right|^2 \approx 1$ et donc :

$$\lambda'_{2j} \leq \lambda'_{1j}\left|W_{1j}^* U\right|^2 + \lambda'_{2j}\left|W_{2j}^* U\right|^2 \leq \lambda'_{1j}$$

Pour ces raisons, on propose d'approcher $\lambda'_{1j}\left|W_{1j}^* U_0\right|^2 + \lambda'_{2j}\left|W_{2j}^* U_0\right|^2$ par $\left(\lambda'_{1j} + \lambda'_{2j}\right)/2$ lorsque la fenêtre j est retenue pour le vecteur directionnel $U$.

L'équation du Maximum de Vraisemblance en $U$ s'écrit avec ces simplifications et sans oublier la contrainte $\|U\|^2 = 1$ :

$$\rho K'' \sum_j \frac{\left(W_{1j}W_{1j}^* + W_{2j}W_{2j}^*\right)U\cdot\left(\dfrac{\lambda'_{1j} + \lambda'_{2j}}{2}\right)\exp(\ldots)}{\rho K''\exp(\ ) + (1-\rho)/C} - \alpha U = 0$$

*Equation 24 Equation du MV pour U en bi sources*

Dans cette équation, les fenêtres j prises en compte sont celles pour lesquelles

$$\left[1 - \left|W_{1j}^* U\right|^2 - \left|W_{2j}^* U\right|^2\right]\left[\frac{\lambda'_{1j} + \lambda'_{2j}}{2}\right] < \text{seuil}$$

*Equation 25 Test d'association d'un vecteur directionnel avec une fenêtre bisources*

Soit $J_{2U}$ ce sous-ensemble de fenêtres. Alors l'Equation 24 se simplifie en :

$U$ est le vecteur propre associé à la plus grande valeur propre de la matrice hermitienne positive :

$$CVPP_{bi} = \sum_{j \in J_{2U}} \left( \lambda'_{1j} + \lambda'_{2j} \right) \left( W_{1j} W_{1j}^* + W_{2j} W_{2j}^* \right)$$

*Equation 26 Matrice à diagonaliser pour obtenir U dans le cas bisources*

On note l'analogie avec le cas monosource.

Comme les mesures ($X_{jn}$) d'une fenêtre à l'autre peuvent être considérées comme indépendantes, il en résulte que le logarithme de la densité de probabilité des mesures est additive relativement aux fenêtres (cf. Equation 6 et Equation 9). On obtient, grâce à l'Equation 20 et à l'Equation 26, le traitement de filtrage des vecteurs directionnels. Il consiste, pour chaque ensemble de fenêtres associé à un même *U*, à calculer, puis à extraire la plus grande valeur propre et le vecteur propre associé de la matrice (étape 142) :

$$CVPP = \sum_{j \in J_{1U}} \lambda'_j W_j W_j^* + \sum_{j \in J_{2U}} \frac{\left( \lambda'_{1j} + \lambda'_{2j} \right)}{2} \left( W_{1j} W_{1j}^* + W_{2j} W_{2j}^* \right),$$

*Equation 27 Matrice à diagonaliser pour obtenir U dans le cas mono + bi sources*

où $J_{1U}$ représente l'ensemble des fenêtres monosource associées à *U*, et $J_{2U}$ l'ensemble des fenêtres bisources associées à *U*.

Cette matrice peut être interprétée comme la matrice de covariance des vecteurs propres des fenêtres associées à une même source pondérés par le rapport signal à bruit de chacune des fenêtres.

Dans le cas monopolarisation, tel que décrit dans la figure 1, le traitement demande donc d'explorer, dans une boucle 130, toutes les directions d'arrivée $\theta$ pour déterminer si l'un des vecteurs directionnels $U = U(\theta)$ peut être candidat pour définir les sous-ensembles de fenêtres $J_{1U}$ et $J_{2U}$ servant au filtrage final des vecteurs directionnels au voisinage de *U*.

Cela se fait en appliquant le test 132M :

- monosource, monopolarisation : $1 - \left| W_j^* U \right|^2$ < ou > seuil (cf. Equation 18)

- bisources, monopolarisation : $1 - \left| W_{1j}^* U \right|^2 - \left| W_{2j}^* U \right|^2$ < ou > seuil (cf. Equation 25)

Les seuils dépendent de la première valeur propre dans le cas monosource, et des deux premières valeurs propres dans le cas bisources.

Dans une boucle 140, pour chaque ensemble de fenêtres associé à un même maximum local de $cardJ_{1U}$ + $cardJ_{2U}$, on filtre ensuite le vecteur directionnel. Le vecteur propre associé à la plus grande valeur propre (étape 144) de la matrice selon l'Equation 27 (étape 142) fournit le vecteur directionnel filtré.

Dans le cas monopolarisation, *U* n'est fonction que de la DOA, en revanche en bipolarisation *U* dépend de la DOA et de la polarisation suivant la relation :

$$U = hH + vV$$

*Equation 28 Expression de U en fonction de la réponse du réseau dans les 2 polarisations*

*croisées*

où les vecteurs *H* et *V* ne dépendent que de la DOA et (*h, v*) caractérisent la polarisation. On peut toujours supposer que :

$$\left| h \right|^2 + \left| v \right|^2 = 1$$

Après orthonormalisation de la base (*H,V*), on peut écrire *U* sous la forme $U = h_n H_n + v_n V_n$ avec toujours $|h_n|^2 + |v_n|^2 = 1$.

Par abus de langage, et pour simplifier les écritures, on conserve la notation $U = hH + vV$ dans la suite.

Dans le cas bipolarisation, pour explorer tous les vecteurs directionnels, on explore toutes les DOA, mais, comme on le verra ci-dessous, il n'est pas nécessaire d'explorer toutes les DOA et toutes les polarisations.

Dans le cas d'un réseau bipolarisation et comme illustré sur la figure 2, la boucle 130 comporte une étape 132B, qui met en oeuvre le test d'association décrit ci-dessous.

Chercher à déterminer *h* et *v* revient à introduire *h* et *v* comme inconnues supplémentaires dans la densité des mesures et à remplacer (*h*,*v*) par son estimée au sens du Maximum de Vraisemblance.

Pour une fenêtre j et $\theta$ (=DOA) données (donc $H(\theta)$ et $V(\theta)$ donnés), il faut trouver $(\hat{h},\hat{v})$ tels que :

$$\max_{h,v} -\left(1 - \left|W_{1j}^{*}U\right|^{2} - \left|W_{2j}^{*}U\right|^{2}\right)\left(\lambda_{1j}^{'}\left|W_{1j}^{*}U_{0}\right|^{2} + \lambda_{2j}^{'}\left|W_{2j}^{*}U_{0}\right|^{2}\right)$$

*Equation 29 Equation du MV pour l'estimation de h et v*

avec $U = hH(\theta)+vV(\theta)$ et $|h|^2+|v|^2 = 1$.

Ce résultat ne sera utilisé que si $1 - \left|W_{1j}^{*}U\right|^{2} - \left|W_{2j}^{*}U\right|^{2} < seuil$ (proche de 0)

On en déduit que les équations fournissant le maximum de l'Equation 29 se réduisent à :

$$\begin{cases} \dfrac{\partial}{\partial \bar{h}}\left\{ \left|W_{1j}^{*}U\right|^{2} + \left|W_{2j}^{*}U\right|^{2}\right\} - \alpha h &= 0 \\ \dfrac{\partial}{\partial \bar{v}}\left\{ \left|W_{1j}^{*}U\right|^{2} + \left|W_{2j}^{*}U\right|^{2}\right\} - \alpha v &= 0 \end{cases}$$

*Equation 30 Résolution de l'équation du MV pour l'estimation de h et v*

car la dérivée du second facteur de l'Equation 29 sera multipliée par $1 - \left|W_{1j}^{*}U\right|^{2} - \left|W_{2j}^{*}U\right|^{2} \approx 0$

On a : $W_{1j}^{*}U = hW_{1j}^{*}H + vW_{1j}^{*}V$ , de même pour $W_{2j}^{*}U$ , et le système de l'Equation 30 s'écrit :

$$\sum_{l=1}^{2}\left(\begin{array}{cc} \left|W_{lj}^{*}H\right|^{2} & \overline{W_{lj}^{*}H}.W_{lj}^{*}V \\ \overline{W_{lj}^{*}V}.W_{lj}^{*}H & \left|W_{lj}^{*}V\right|^{2} \end{array}\right)\binom{h}{v} - \alpha\binom{h}{v} = 0$$

*Equation 31 Résolution de l'équation du MV pour l'estimation de h et v*

$(\hat{h},\hat{v})$ est donc vecteur propre de la matrice précédente associé à la valeur propre $\alpha$. $\alpha$ est la plus grande valeur propre et en même temps le maximum de $\left|W_{1j}^{*}U\right|^{2} + \left|W_{2j}^{*}U\right|^{2}$ . En présence de deux sources de même DOA et de polarisations différentes, on montre qu'il est possible de retrouver la DOA commune, mais pas la polarisation de chaque source.

Dans le cas monosource, l'Equation 31 se simplifie en :

$$\left(\begin{array}{cc} \left|W_{j}^{*}H\right|^{2} & \overline{W_{j}^{*}H}W_{j}^{*}V \\ \overline{W_{j}^{*}V}W_{j}^{*}H & \left|W_{j}^{*}V\right|^{2} \end{array}\right)\binom{h}{v} - \alpha\binom{h}{v} = 0$$

*Equation 32 Résolution de l'équation du MV pour l'estimation de h et v en monosource*

On peut déduire de ce qui précède la mise en oeuvre pratique de l'algorithme d'association des *U* avec les W et de filtrage des *U* dans le cas d'un réseau bipolarisation.

Pour chaque $\theta$ ($\theta$=DOA=(site, gisement) ou = pseudo-gisement) et pour chaque fenêtre :

1. Extraction des éléments propres de la matrice de l'Equation 31 (en bi sources) ou de l'Equation 32 (en monosource).
2. Test d'association :

Si valeur propre maximale $\alpha \ll 1$ : pas de source pour ce $\theta$ ;
Si valeur propre maximale $\alpha \approx 1$ et seconde valeur propre $\alpha' \ll 1$ : $\theta$ est la DOA d'une source, et le vecteur propre associé à a est le vecteur de polarisation ($h,v$) de cette source ;
Si valeur propre maximale $\alpha \approx 1$ et seconde valeur propre $\alpha'$ proche de 1 : $\theta$ est la DOA de deux sources, et il y a indétermination sur la polarisation des deux sources. Cette situation ne peut se produire que sur des fenêtres bisources.

*Equation 33 Test d'association en bipolarisation*

Pour chaque ensemble de fenêtres associées à un même ($\theta,h,v$), estimation du vecteur directionnel filtré :
3. Calcul du plus grand vecteur propre associé à la matrice

$$CVPP = \sum_{j \in J_{1U}} \lambda_j W_j W_j^* + \sum_{j \in J_{2U}} (1/2)\big(\lambda_{1j} + \lambda_{2j}\big)\big(W_{1j} W_{1j}^* + W_{2j} W_{2j}^*\big),$$

où $J_{1U}$ représente l'ensemble des fenêtres monosource associées à $U(\theta,h,v)$, et $J_{2U}$ l'ensemble des fenêtres bisources associées à $U(\theta,h,v)$

La solution proposée consiste donc à faire l'association des fenêtres, non pas à partir des vecteurs directionnels (ou, ce qui revient au même, de la DOA et de la polarisation), mais directement à partir des vecteurs propres des matrices de covariances des mesures de chaque fenêtre.

On dispose ainsi d'une pondération naturelle des mesures au travers des valeurs propres des matrices de covariance locale, ce qui n'est pas le cas lorsque l'association se fait à partir des vecteurs directionnels car il n'y a plus équivalence entre vecteur propre et vecteur directionnel dès lors qu'il y a plus d'une source en présence.

## Revendications

1. Procédé de détermination de la direction d'arrivée ($\theta$), respectivement de la direction d'arrivée et de la polarisation, de signaux issus de plusieurs sources radioélectriques au moyen d'un réseau de capteurs à diversité d'espace monopolarisation, respectivement bipolarisation, composé de P voies de réception avec P> 2 et P pouvant être inférieur au nombre de sources, lorsque le degré de parcimonie des signaux est tel que localement, dans leur représentation temps/fréquence, le nombre de sources présentes est égal à 2 au plus, et comportant les étapes suivantes :

a) calculer (106) les Transformées de Fourier Discrètes successives du signal reçu échantillonné pour obtenir une grille P-vectorielle temps-fréquence du signal ; chaque élément de la grille contenant un vecteur complexe de dimension P appelé mesure, le procédé étant **caractérisé en ce qu'**il comporte les étapes additionnelles suivantes :

b) définir (116) un découpage de la grille temps-fréquence, en un ensemble de fenêtres ;
c) sur chaque fenêtre (120),

c1- calculer (122) la matrice de covariance (C) des mesures de cette fenêtre,
c2- dénombrer les sources pour identifier une fenêtre monosource ou bisources,
c3- déterminer (124) la ou les deux plus grandes valeurs propres, et le ou les deux vecteurs propres associés de la matrice de covariance (C) ;

d) discrétiser le domaine des directions d'arrivée ($\theta$) accessibles par le réseau,
e) générer des vecteurs directionnels (U) pour les directions d'arrivée ($\theta$) discrétisées accessibles par le réseau ;
f) associer (130) les vecteurs directionnels (U) aux fenêtres, par comparaison de la norme du projeté du vecteur directionnel (U) sur le sous-espace vectoriel engendré par le ou les deux vecteurs propres de chaque fenêtre considérée ;
g) pour chaque ensemble de fenêtres associées à un même vecteur directionnel (U), obtenir (140) le vecteur directionnel filtré de la source correspondante en calculant le vecteur propre associé à la plus grande valeur propre d'une matrice construite à partir des valeurs propres et vecteurs propres des matrices de covariance (*C*) desdites fenêtres.

**2.** Procédé selon la revendication 1, **caractérisé en ce que** l'étape f) d'association (130) des vecteurs directionnels (*U*) aux fenêtres monosource (J$_1$) comporte une recherche du maximum en fonction du vecteur directionnel (*U*), de la densité de probabilité des mesures pour des fenêtres monosource, sous la contrainte que le module du vecteur directionnel (*U*) soit égal à 1.

**3.** Procédé selon la revendication 1 ou 2, **caractérisé en ce que**, dans l'étape f) d'association (130) des vecteurs directionnels (*U*) aux fenêtres monosource (J$_1$), les inconnues (s$_n$) représentant l'amplitude complexe du signal après Transformées de Fourier Discrètes sont remplacées par leur estimée au sens du maximum de vraisemblance.

**4.** Procédé selon la revendication 1, **caractérisé en ce que** l'étape f) d'association (130) des vecteurs directionnels (*U*) aux fenêtres bisources (J$_2$) comporte une recherche du maximum en fonction du vecteur directionnel (*U*), de la densité de probabilité des mesures pour des fenêtres bisources, sous la contrainte que le module du vecteur directionnel (*U*) soit égal à 1.

**5.** Procédé selon la revendication 1 ou 4, **caractérisé en ce que**, dans l'étape f) d'association (130) des vecteurs directionnels (*U*) aux fenêtres bisources (J$_2$), les inconnues (s$_n$, c$_n$) représentant l'amplitude complexe du signal de chaque source après Transformées de Fourier Discrètes sont remplacées par leur estimée au sens du maximum de vraisemblance.

**6.** Procédé selon l'une quelconque des revendications précédentes, **caractérisée en ce que**, pour un réseau bipolarisation, l'étape e) de génération des vecteurs directionnels (*U*) comporte une estimation des paramètres de polarisation au sens du Maximum de Vraisemblance.

**7.** Procédé selon l'une quelconque des revendications précédentes, **caractérisé en ce que** pour un réseau bipolarisation, pour chaque direction d'arrivée $\theta$, soit, pour tous les ($H(\theta), V(\theta)$), où $H(\theta)$ (respectivement $V(\theta)$), est la réponse du réseau à une onde polarisée horizontalement (respectivement verticalement), de direction d'arrivée $\theta$, pour chaque fenêtre bisources, on calcule les éléments propres de la matrice

$$M_{bi} = \sum_{l=1}^{2} \begin{pmatrix} \left|W_{lj}^{*}H(\theta)\right|^{2} & \overline{W_{lj}^{*}H(\theta)}W_{lj}^{*}V(\theta) \\ \overline{W_{lj}^{*}V(\theta)}W_{lj}^{*}H(\theta) & \left|W_{lj}^{*}V(\theta)\right|^{2} \end{pmatrix}$$

où $W_{1j}$ est le vecteur propre associé à la plus grande valeur propre de la matrice de covariance (*C*) de la fenêtre bisources considérée ;
et $W_{2j}$ est le vecteur propre associé à la deuxième plus grande valeur propre de la matrice de covariance (*C*) de la fenêtre bisources considérée ;
si la valeur propre maximum *a* de $M_{bi}$ est proche de 1, on associe, à cette fenêtre, le vecteur directionnel $U(\theta,h,v)$ correspondant à la direction $\theta$ et au vecteur de polarisation ($h,v$) égal au vecteur propre associé à *a* ;
si les deux valeurs propres de $M_{bi}$ sont proches de 1, les deux sources ont comme direction angulaire $\theta$ mais leur vecteur de polarisation reste indéterminé ;
et :
pour chaque fenêtre monosource, on calcule les éléments propres de la matrice

$$M_{mono} = \begin{pmatrix} \left|W_{j}^{*}H(\theta)\right|^{2} & \overline{W_{j}^{*}H(\theta)}W_{j}^{*}V(\theta) \\ \overline{W_{j}^{*}V(\theta)}W_{j}^{*}H(\theta) & \left|W_{j}^{*}V(\theta)\right|^{2} \end{pmatrix}$$

où $W_{j}$ est le vecteur propre associé à la plus grande valeur propre de la matrice de covariance (*C*) de la fenêtre monosource considérée ;
si la valeur propre maximum *a* de $M_{mono}$ est proche de 1, on associe à cette fenêtre le vecteur directionnel $U(\theta,h,v)$ correspondant à la direction $\theta$ et au vecteur de polarisation ($h,v$) égal au vecteur propre associé à $\alpha$.

**8.** Procédé selon l'une quelconque des revendications 1 à 5, **caractérisé en ce que** lorsque le réseau est monopolarisation, pour chaque direction d'arrivée ($\theta$), c'est-à-dire pour chaque $U = U(\theta)$ :

chaque vecteur directionnel ($U$) est associé ou non à chaque fenêtre monosource par comparaison de

$$1 - \left| W_j^* U \right|^2$$ à un seuil, et

chaque vecteur directionnel ($U$) est associé ou non à chaque fenêtre bisources par comparaison de

$$1 - \left| W_{1j}^* U \right|^2 - \left| W_{2j}^* U \right|^2$$ à un seuil ;

où $W_j$ est le vecteur propre associé à la plus grande valeur propre de la matrice de covariance ($C$) de la fenêtre considérée, lorsque la fenêtre est monosource ;
où $W_{1j}$ est le vecteur propre associé à la plus grande valeur propre de la matrice de covariance ($C$) de la fenêtre considérée, lorsque la fenêtre est bisources ;
où $W_{2j}$ est le vecteur propre associé à la deuxième plus grande valeur propre de la matrice de covariance ($C$) de la fenêtre considérée, lorsque la fenêtre est bisources ;
et où les seuils dépendent de la plus grande valeur propre de la matrice de covariance ($C$) dans le cas monosource, et des deux plus grandes valeurs propres de la matrice de covariance ($C$) dans le cas bisources.

**9.** Procédé selon la revendication 1, **caractérisé en ce que**, pour un réseau monopolarisation ou bipolarisation, pour estimer un vecteur directionnel filtré (140) :

g1 - on calcule (142) la matrice $CVPP$ de covariance des vecteurs propres pondérés de chaque fenêtre de la réunion ($J_{1U} \cup J_{2U}$) de l'ensemble des fenêtres monosource et de l'ensemble des fenêtres bisources associées à un même vecteur directionnel ($U$) ; chaque vecteur propre est pondéré par le rapport signal à bruit de la fenêtre dont il provient ;

$$CVPP = \sum_{j \in J_{1U}} \lambda_j' W_j W_j^* + \sum_{j \in J_{2U}} \frac{\left( \lambda_{1j}' + \lambda_{2j}' \right)}{2} \left( W_{1j} W_{1j}^* + W_{2j} W_{2j}^* \right),$$

où $J_{1U}$ est l'ensemble des fenêtres monosource associées au vecteur directionnel ($U$) ;
où $J_{2U}$ est l'ensemble des fenêtres bisources associées au vecteur directionnel ($U$) ;
où $W_j$ est le vecteur propre associé à la plus grande valeur propre $\lambda_j$ de la matrice de covariance ($C$) de la j$^{ème}$ fenêtre de l'ensemble $J_{1U}$ ;
où $W_{1j}$ est le vecteur propre associé à la plus grande valeur propre $\lambda_{1j}$ de la matrice de covariance ($C$) de la j$^{ème}$ fenêtre de l'ensemble $J_{2U}$ ;
où $W_{2j}$ est le vecteur propre associé à la deuxième plus grande valeur propre $\lambda_{2j}$ de la matrice de covariance ($C$) de la j$^{ème}$ fenêtre de l'ensemble $J_{2U}$ ;
où $\lambda_i'$ est égal à $(\lambda_j - 2\sigma^2)/2\sigma^2$ ;

où $\lambda_{1j}'$ est égal à $(\lambda_{1j} - 2\sigma^2)/2\sigma^2$ ;

où $\lambda_{2j}'$ est égal à $(\lambda_{2j} - 2\sigma^2)/2\sigma^2$ et
où $2\sigma^2$ est la puissance du bruit.

g2 - on prend pour vecteur directionnel filtré (144) le vecteur propre associé à la plus grande valeur propre de la matrice de covariance des vecteurs propres pondérés $CVPP$.

**10.** Installation de détermination de la direction d'arrivée ($\theta$), respectivement de la direction d'arrivée et de la polarisation, de signaux issus de plusieurs sources radioélectriques comportant un réseau de capteurs à diversité d'espace monopolarisation, respectivement bipolarisation, composé de P voies de réception avec P> 2 et P pouvant être inférieur au nombre de sources, lorsque le degré de parcimonie des signaux est tel que localement, dans leur représentation temps/fréquence, le nombre de sources présentes est égal à 2 au plus, **caractérisée en ce qu'**elle comporte des moyens pour la mise en oeuvre d'un procédé selon l'une quelconque des revendications précédentes.

**Patentansprüche**

1. Verfahren zum Bestimmen der Ankunftsrichtung ($\theta$) bzw. der Ankunftsrichtung und der Polarisation von Signalen, die von mehreren radioelektrischen Quellen stammen, mittels eines Netzes von Sensoren mit Monopolarisations- bzw. Bipolarisationsraumdiversität, das aus P Empfangswegen besteht, wobei P > 2 und P geringer sein kann als die Anzahl von Quellen, wenn der Spärlichkeitsgrad der Signale derart ist, dass lokal in ihrer Zeit/Frequenz-Darstellung die Anzahl von vorhandenen Quellen höchstens gleich 2 ist, und mit den folgenden Schritten:

   a) Berechnen (106) der aufeinander folgenden diskreten FourierTransformierten des abgetasteten empfangenen Signals, um ein Zeit-Frequenz-P-Vektorraster des Signals zu erhalten; wobei jedes Element des Rasters einen komplexen Vektor mit der Dimension P enthält, der Messvektor genannt wird, wobei das Verfahren **dadurch gekennzeichnet ist, dass** es die folgenden zusätzlichen Schritte umfasst:
   b) Definieren (116) einer Auftrennung des Zeit-Frequenz-Rasters in einen Satz von Fenstern;
   c) in jedem Fenster (120)

      c1 - Berechnen (122) der Kovarianzmatrix (C) der Messungen dieses Fensters,
      c2 - Zählen der Quellen, um ein Monoquellen- oder Biquellenfenster zu identifizieren,
      c3 - Bestimmen (124) des oder der zwei größten Eigenwerte und des oder der zwei Eigenvektoren, die der Kovarianzmatrix (C) zugeordnet sind;

   d) Diskretisieren des Bereichs der Ankunftsrichtungen ($\theta$), die durch das Netz zugänglich sind,
   e) Erzeugen von Richtungsvektoren (U) für die diskretisierten Ankunftsrichtungen ($\theta$), die durch das Netz zugänglich sind;
   f) Zuordnen (130) der Richtungsvektoren (U) zu den Fenstern durch Vergleich der Norm der Projizierten des Richtungsvektors (U) auf den Vektorunterraum, der durch den oder die zwei Eigenvektoren jedes betrachteten Fensters erzeugt wird;
   g) für jeden Satz von Fenstern, die einem gleichen Richtungsvektor (U) zugeordnet sind, Erhalten (140) des gefilterten Richtungsvektors der entsprechenden Quelle durch Berechnen des Eigenvektors, der dem größten Eigenwert einer Matrix zugeordnet ist, die anhand der Eigenwerte und Eigenvektoren der Kovarianzmatrizen (C) der Fenster konstruiert wird.

2. Verfahren nach Anspruch 1, **dadurch gekennzeichnet, dass** der Schritt f) der Zuordnung (130) der Richtungsvektoren (U) zu den Monoquellenfenstern ($J_1$) eine Suche des Maximums der Wahrscheinlichkeitsdichte der Messungen für Monoquellenfenster in Abhängigkeit vom Richtungsvektor (U) unter der Bedingung, dass der Modul des Richtungsvektors (U) gleich 1 ist, umfasst.

3. Verfahren nach Anspruch 1 oder 2, **dadurch gekennzeichnet, dass** in Schritt f) der Zuordnung (130) der Richtungsvektoren (U) zu den Monoquellenfenstern ($J_1$) die Unbekannten ($s_n$), die die komplexe Amplitude des Signals nach diskreten Fourier-Transformationen darstellen, durch ihre Abschätzung im Sinne des Maximums der Plausibilität ersetzt werden.

4. Verfahren nach Anspruch 1, **dadurch gekennzeichnet, dass** der Schritt f) der Zuordnung (130) der Richtungsvektoren (U) zu den Biquellenfenstern ($J_2$) eine Suche des Maximums der Wahrscheinlichkeitsdichte der Messungen für Biquellenfenster in Abhängigkeit vom Richtungsvektor (U) unter der Bedingung, dass der Modul des Richtungsvektors (U) gleich 1 ist, umfasst.

5. Verfahren nach Anspruch 1 oder 4, **dadurch gekennzeichnet, dass** in Schritt f) der Zuordnung (130) der Richtungsvektoren (U) zu den Biquellenfenstern ($J_2$) die Unbekannten ($s_n, c_n$), die die komplexe Amplitude des Signals jeder Quelle nach diskreten Fourier-Transformationen darstellen, durch ihre Abschätzung im Sinne des Maximums der Plausibilität ersetzt werden.

6. Verfahren nach einem der vorangehenden Ansprüche, **dadurch gekennzeichnet, dass** für ein Bipolarisationsnetz der Schritt e) der Erzeugung der Richtungsvektoren (U) eine Abschätzung der Polarisationsparameter im Sinne des Maximums der Plausibilität umfasst.

7. Verfahren nach einem der vorangehenden Ansprüche, **dadurch gekennzeichnet, dass** für ein Bipolarisationsnetz für jede Ankunftsrichtung $\theta$, das heißt für alle (H($\theta$),V($\theta$)), wobei H($\theta$) (bzw. V($\theta$)) die Antwort des Netzes auf eine horizontal (bzw. vertikal) polarisierte Welle mit der Ankunftsrichtung $\theta$ ist, für jedes Biquellenfenster die Eigenelemente der Matrix

$$M_{bi} = \sum_{l=1}^{2}\left( \begin{array}{cc} \left|W_{lj}^{*}H(\theta)\right|^{2} & \overline{W_{lj}^{*}H(\theta)}W_{lj}^{*}V(\theta) \\ \overline{W_{lj}^{*}V(\theta)}W_{lj}^{*}H(\theta) & \left|W_{lj}^{*}V(\theta)\right|^{2} \end{array} \right)$$

berechnet werden,

wobei $W_{1j}$ der Eigenvektor ist, der dem größten Eigenwert der Kovarianzmatrix (C) des betrachteten Biquellenfensters zugeordnet ist;
und $W_{2j}$ der Eigenvektor ist, der dem zweitgrößten Eigenwert der Kovarianzmatrix (C) des betrachteten Biquellenfensters zugeordnet ist;
wenn der maximale Eigenwert $\alpha$ von $M_{bi}$ nahe bei 1 liegt, diesem Fenster der Richtungsvektor U($\theta$,h,v) zugeordnet wird, der der Richtung $\theta$ und dem Polarisationsvektor (h,v) entspricht, der gleich dem Eigenvektor ist, der $\alpha$ zugeordnet ist;
wenn die zwei Eigenwerte von $M_{bi}$ nahe 1 liegen, die zwei Quellen als Winkelrichtung $\theta$ aufweisen, aber ihr Polarisationsvektor unbestimmt bleibt;
und:
für jedes Monoquellenfenster die Eigenelemente der Matrix

$$M_{mono} = \left( \begin{array}{cc} \left|W_{j}^{*}H(\theta)\right|^{2} & \overline{W_{j}^{*}H(\theta)}W_{j}^{*}V(\theta) \\ \overline{W_{j}^{*}V(\theta)}W_{j}^{*}H(\theta) & \left|W_{j}^{*}V(\theta)\right|^{2} \end{array} \right)$$

berechnet werden,

wobei $W_{j}$ der Eigenvektor ist, der dem größten Eigenwert der Kovarianzmatrix (C) des betrachteten Monoquellenfensters zugeordnet ist;
wenn der maximale Eigenwert $\alpha$ von $M_{mono}$ nahe 1 liegt, diesem Fenster der Richtungsvektor U($\theta$,h,v) zugeordnet wird, der der Richtung $\theta$ und dem Polarisationsvektor (h,v) entspricht, der gleich dem Eigenvektor ist, der $\alpha$ zugeordnet ist.

8. Verfahren nach einem der Ansprüche 1 bis 5, **dadurch gekennzeichnet, dass**, wenn das Netz ein Monopolarisationsnetz ist, für jede Ankunftsrichtung ($\theta$), das heißt für jedes U = U($\theta$):

jeder Richtungsvektor (U) jedem Monoquellenfenster durch Vergleich von $1-\left|W_{j}^{*}U\right|^{2}$ mit einem Schwellenwert zugeordnet wird oder nicht, und

jeder Richtungsvektor (U) jedem Biquellenfenster durch Vergleich von $1-\left|W_{1j}^{*}U\right|^{2}-\left|W_{2j}^{*}U\right|^{2}$ mit einem Schwellenwert zugeordnet wird oder nicht;

wobei $W_{j}$ der Eigenvektor ist, der dem größten Eigenwert der Kovarianzmatrix (C) des betrachteten Fensters zugeordnet ist, wenn das Fenster ein Monoquellenfenster ist;
wobei $W_{1j}$ der Eigenvektor ist, der dem größten Eigenwert der Kovarianzmatrix (C) des betrachteten Fensters zugeordnet ist, wenn das Fenster ein Biquellenfenster ist;
wobei $W_{2j}$ der Eigenvektor ist, der dem zweitgrößten Eigenwert der Kovarianzmatrix (C) des betrachteten Fensters zugeordnet ist, wenn das Fenster ein Biquellenfenster ist;
und wobei die Schwellenwerte vom größten Eigenwert der Kovarianzmatrix (C) im Monoquellenfall und von den zwei größten Eigenwerten der Kovarianzmatrix (C) im Biquellenfall abhängen.

9. Verfahren nach Anspruch 1, **dadurch gekennzeichnet, dass** für ein Monopolarisations- oder Bipolarisationsnetz zum Abschätzen eines gefilterten Richtungsvektors (140):

g1 - die CVPP-Kovarianzmatrix der gewichteten Eigenvektoren jedes Fensters der Vereinigung ($J_{1U} \cup J_{2U}$) des Satzes der Monoquellenfenster und des Satzes der Biquellenfenster, die einem gleichen Richtungsvektor (U) zugeordnet sind, berechnet wird (142); wobei jeder Eigenvektor durch den Rauschabstand des Fensters gewichtet wird, von dem er stammt:

$$ CVPP = \sum_{j \in J_{1U}} \lambda'_j W_j W_j^* + \sum_{j \in J_{2U}} \frac{(\lambda'_{1j} + \lambda'_{2j})}{2} (W_{1j} W_{1j}^* + W_{2j} W_{2j}^*), $$

wobei $J_{1U}$ der Satz der Monoquellenfenster ist, die dem Richtungsvektor (U) zugeordnet sind;

wobei $J_{2U}$ der Satz der Biquellenfenster ist, die dem Richtungsvektor (U) zugeordnet sind;

wobei $W_j$ der Eigenvektor ist, der dem größten Eigenwert $\lambda_j$ der Kovarianzmatrix (C) des j-ten Fensters des Satzes $J_{1U}$ zugeordnet ist;

wobei $W_{1j}$ der Eigenvektor ist, der dem größten Eigenwert $\lambda_{1j}$ der Kovarianzmatrix (C) des j-ten Fensters des Satzes $J_{2U}$ zugeordnet ist;

wobei $W_{2j}$ der Eigenvektor ist, der dem zweitgrößten Eigenwert $\lambda_{2j}$ der Kovarianzmatrix (C) des j-ten Fensters des Satzes $J_{2U}$ zugeordnet ist;

wobei $\lambda'_i$ gleich $(\lambda_j - 2\sigma^2)/2\sigma^2$ ist;

wobei $\lambda'_{1j}$ gleich $(\lambda_{1j} - 2\sigma^2)/2\sigma^2$ ist;

wobei $\lambda'_{2j}$ gleich $(\lambda_{2j} - 2\sigma^2)/2\sigma^2$ ist und

wobei $2\sigma^2$ die Rauschleistung ist,

g2 - als gefilterter Richtungsvektor (144) der Eigenvektor genommen wird, der dem größten Eigenwert der Kovarianzmatrix der gewichteten CVPP-Eigenvektoren zugeordnet ist.

10. Anlage zur Bestimmung der Ankunftsrichtung ($\theta$) bzw. der Ankunftsrichtung und der Polarisation von Signalen, die von mehreren radioelektrischen Quellen stammen, mit einem Netz von Sensoren mit Monopolarisations-bzw. Bipolarisationsraumdiversität, das aus P Empfangswegen besteht, wobei P > 2 und P geringer als die Anzahl von Quellen sein kann, wenn der Spärlichkeitsgrad der Signale derart ist, dass lokal in ihrer Zeit/Frequenz-Darstellung die Anzahl von vorhandenen Quellen gleich höchstens 2 ist, **dadurch gekennzeichnet, dass** sie Mittel für die Ausführung eines Verfahrens nach einem der vorangehenden Ansprüche umfasst.

## Claims

1. Method for determining the direction of arrival ($\theta$), or the direction of arrival and of polarisation, of signals emanating from a plurality of radio sources by means of a single-polarisation or dual-polarisation array of spatially diverse sensors consisting of P receiving channels with P > 2 and it being possible for P to be less than the number of sources, when the degree of parsimony of the signals is such that locally, in the time/frequency representation thereof, the number of sources present is at most 2, and comprising the following steps:

a) calculating (106) the successive Discrete Fourier Transforms of the sampled received signal in order to obtain a P-vector time-frequency grid of the signal; each element of the grid containing a complex dimensional vector P, referred to as a measurement, the method being **characterised in that** it comprises the following additional steps:

b) defining (116) a division of the time-frequency grid into a set of windows;

c) on each window (120),

c1- calculating (122) the covariance matrix (C) of the measurements of said window,

c2- counting the sources in order to identify a single-source or dual-source window,

c3- determining (124) the or the two largest eigenvalues, and the or the two associated eigenvectors of the covariance matrix (C);

d) discretising the field of the directions of arrival ($\theta$) that are accessible to the array,

e) generating directional vectors (U) for the discretised directions of arrival ($\theta$) accessible to the array;

f) associating (130) the directional vectors (U) with the windows, by comparing the magnitude of the projection of the directional vector (U) with the vector subspace generated by the or the two eigenvectors of each considered window;

g) for each set of windows associated with the same directional vector (*U*), obtaining (140) the filtered directional vector from the corresponding source by calculating the eigenvector associated with the largest eigenvalue of a matrix constructed from the eigenvalues and eigenvectors of the covariance matrices (*C*) of said windows.

2. Method according to claim 1, **characterised in that** the step f) of associating (130) the directional vectors (*U*) with the single-source windows ($J_1$) comprises searching for the maximum, on the basis of the directional vector (*U*), of the probability density of the measurements for single-source windows, on the condition that the modulus of the directional vector (*U*) is 1.

3. Method according to either claim 1 or claim 2, **characterised in that**, in the step f) of associating (130) the directional vectors (*U*) with the single-source windows ($J_1$), the unknowns ($s_n$) representing the complex amplitude of the signal following Discrete Fourier Transforms are replaced by the estimate thereof in terms of the maximum likelihood.

4. Method according to claim 1, **characterised in that** the step f) of associating (130) the directional vectors (*U*) with the dual-source windows ($J_2$) comprises searching for the maximum, on the basis of the directional vector (*U*), of the probability density of the measurements for dual-source windows, on the condition that the modulus of the directional vector (*U*) is 1.

5. Method according to either claim 1 or claim 4, **characterised in that**, in the step f) of associating (130) the directional vectors (*U*) with the dual-source windows ($J_2$), the unknowns ($s_n$, $c_n$) representing the complex amplitude of the signal from each source following Discrete Fourier Transforms are replaced by the estimate thereof in terms of the maximum likelihood.

6. Method according to any of the preceding claims, **characterised in that**, for a dual-polarisation array, the step e) of generating the directional vectors (*U*) comprises estimating polarisation parameters in terms of the maximum likelihood.

7. Method according to any of the preceding claims, **characterised in that** for a dual-polarisation array, for each direction of arrival $\theta$, namely for all the ($H(\theta)$, $V(\theta)$), where $H(\theta)$ (or $V(\theta)$) is the response of the array to a horizontally (or vertically) polarised wave, of the direction of arrival $\theta$, for each dual-source window, the eigenelements of the following matrix are calculated

$$M_{dual} = \sum_{l=1}^{2} \left( \begin{array}{cc} \left| W_{lj}^{*} H(\theta) \right|^{2} & \overline{W_{lj}^{*} H(\theta)}.W_{lj}^{*} V(\theta) \\ \overline{W_{lj}^{*} V(\theta)}.W_{lj}^{*} H(\theta) & \left| W_{lj}^{*} V(\theta) \right|^{2} \end{array} \right)$$

where $W_{1j}$ is the eigenvector associated with the largest eigenvalue of the covariance matrix (*C*) of the dual-source window considered;
and $W_{2j}$ is the eigenvector associated with the second largest eigenvalue of the covariance matrix (*C*) of the dual-source window considered;
if the maximum eigenvalue $\alpha$ of $M_{dual}$ is close to 1, the directional vector $U(\theta, h, v)$ corresponding to the direction $\theta$ and to the polarisation vector (*h, v*) equal to the eigenvector associated with $\alpha$ is associated with said window;
if the two eigenvalues of $M_{dual}$ are close to 1, the two sources have $\theta$ as an angular direction, but the polarisation vector thereof remains undetermined;
and:
for each single-source window, the eigenelements of the following matrix are calculated

$$M_{single} = \left( \begin{array}{cc} \left| W_{j}^{*} H(\theta) \right|^{2} & \overline{W_{j}^{*} H(\theta)}.W_{j}^{*} V(\theta) \\ \overline{W_{j}^{*} V(\theta)}.W_{j}^{*} H(\theta) & \left| W_{j}^{*} V(\theta) \right|^{2} \end{array} \right)$$

where $W_j$ is the eigenvector associated with the largest eigenvalue of the covariance matrix ($C$) of the single-source window considered;

if the maximum eigenvalue $\alpha$ of $M_{single}$ is close to 1, the directional vector $U(\theta, h, v)$ corresponding to the direction $\theta$ and to the polarisation vector ($h, v$) equal to the eigenvector associated with $\alpha$ is associated with said window.

8. Method according to any of claims 1 to 5, **characterised in that** when the array is single-polarisation, for each direction of arrival ($\theta$), i.e. for each $U = U(\theta)$:

each directional vector ($U$) is associated or not with each single-source window by comparing $1 - \left| W_j^* U \right|^2$ with a threshold, and

each directionval vector ($U$) is associated or not with each dual-source window by comparing $1 - \left| W_{1j}^* U \right|^2 - \left| W_{2j}^* U \right|^2$ with a threshold;

where $W_j$ is the eigenvector associated with the largest eigenvalue of the covariance matrix ($C$) of the window considered, when the window is single-source;

where $W_{1j}$ is the eigenvector associated with the largest eigenvalue of the covariance matrix ($C$) of the window considered, when the window is dual-source;

where $W_{2j}$ is the eigenvector associated with the second largest eigenvalue of the covariance matrix ($C$) of the window considered, when the window is dual-source;

and where the thresholds depend on the largest eigenvalue of the covariance matrix ($C$) in the single-source case, and on the two largest eigenvalues of the covariance matrix ($C$) in the dual-source case.

9. Method according to claim 1, **characterised in that**, for a single-polarisation or dual-polarisation array, in order to estimate a filtered directional vector (140):

g1 - the weighted eigenvector covariance matrix $CVPP$ of each window collating ($J_{1U} \cup J_{2U}$) the set of single-source windows and the set of dual-source windows associated with the same directional vector ($U$) is calculated; each eigenvector is weighted by the signal-to-noise ratio of the window from which it originates;

$$ CVPP = \sum_{j \in J_{1U}} \lambda_j' W_j W_j^* + \sum_{j \in J_{2U}} \frac{\left( \lambda_{1j}' + \lambda_{2j}' \right)}{2} \left( W_{1j} W_{1j}^* + W_{2j} W_{2j}^* \right), $$

where $J_{1U}$ is the set of single-source windows associated with the directional vector ($U$);

where $J_{2U}$ is the set of dual-source windows associated with the directional vector ($U$);

where $W_j$ is the eigenvector associated with the largest eigenvalue $\lambda_j$ of the covariance matrix ($C$) of the jth window of the set $J_{1U}$;

where $W_{1j}$ is the eigenvector associated with the largest eigenvalue $\lambda_{1j}$ of the covariance matrix ($C$) of the jth window of the set $J_{2U}$;

where $W_{2j}$ is the eigenvector associated with the second largest eigenvalue $\lambda_{2j}$ of the covariance matrix ($C$) of the jth window of the set $J_{2U}$;

where $\lambda_j'$ is $(\lambda_j - 2\sigma^2)/2\sigma^2$;

where $\lambda_{1j}'$ is $(\lambda_{1j} - 2\sigma^2)/2\sigma^2$;

where $\lambda_{2j}'$ is $(\lambda_{2j} - 2\sigma^2)/2\sigma^2$ and

where $2\sigma^2$ is the noise power,

g2 - the eigenvector associated with the largest eigenvalue of the weighted eigenvector covariance matrix $CVPP$ is taken as the filtered directional vector (144).

10. Apparatus for determining the direction of arrival ($\theta$), or the direction of arrival and of polarisation, of signals emanating from a plurality of radio sources, comprising a single-polarisation or dual-polarisation array of spatially diverse sensors consisting of P receiving channels with P > 2 and it being possible for P to be less than the number of sources, when the degree of parsimony of the signals is such that locally, in the time/frequency representation thereof, the number of sources present is at most 2, **characterised in that** it comprises means for carrying out a method according to any of the preceding claims.

ANT 1      ANT 2      ANT 3      ANT P

104

$R_1$      $R_2$      $R_3$      $\cdots$  $R_P$

106

TFD     TFD     TFD     TFD

116

$$C = \sum_{n=1}^{N} X_n X_n^{*}$$  — 122

120

Calcul de $W_j$, $\lambda_j$ (monosource)
ou $(W_{1j}, W_{2j}), (\lambda_{1j}, \lambda_{2j})$ (bisources) — 124

130

Seuil de :   $1 - \left| W_j^{*} U \right|^2$   (monosource)

ou de :   $1 - \left| W_{1j}^{*} U \right|^2 - \left| W_{2j}^{*} U \right|^2$  (bisources) — 132M

U

$$\sum_{j \in J1U} \lambda_j^{'} W_j W_j^{*} + \sum_{j \in J2U} (1/2) \cdot \left( \lambda_{1j}^{'} + \lambda_{2j}^{'} \right) \left( W_{1j} W_{1j}^{*} + W_{2j} W_{2j}^{*} \right)$$ — 142

Calculer le vecteur propre
associé à la plus grande valeur propre — 144

140

## FIG.1

EP 3 281 026 B1

104

ANT 1 polar1  ANT 2 polar2   ANT 3 polar1  ANT 4 polar2   ANT 5 polar1  ANT 6 polar2   ... ANT P-1 polar1  ANT P polar2

$R_1$ $R_2$ $R_3$ $R_4$ $R_5$ $R_6$ $R_{P-1}$ $R_P$

106

TFD polar 1 | TFD polar 2 | TFD polar 1 | TFD polar 2 | TFD polar 1 | TFD polar 2 | TFD polar 1 | TFD polar 2

116

120

$$C = \sum_{n=1}^{N} X_n X_n^*$$ 122

Calcul de $W_j$, $\lambda_j$ (monosource) ou $(W_{1j}, W_{2j})$, $(\lambda_{1j}, \lambda_{2j})$ (bisources) 124

130

Calcul de $\alpha$ et $\alpha'$ vp max de :
Seuil de $1-\alpha$ et de $1-\alpha'$

$$\sum_{l=1}^{2} \begin{pmatrix} |W_{lj}^* H|^2 & \overline{W_{lj}^* H . W_{lj}^* V} \\ \overline{W_{lj}^* V . W_{lj}^* H} & |W_{lj}^* V|^2 \end{pmatrix} \text{ ou de } \begin{pmatrix} |W_j^* H|^2 & \overline{W_j^* H . W_j^* V} \\ \overline{W_j^* V . W_j^* H} & |W_j^* V|^2 \end{pmatrix}$$ 132B

140

$$\sum_{j \in J1U} \lambda'_j W_j W_j^* + \sum_{j \in J2U} (1/2) . \left( \lambda'_{1j} + \lambda'_{2j} \right) \left( W_{1j} W_{1j}^* + W_{2j} W_{2j}^* \right)$$ 142

Calculer le vecteur propre associé à la plus grande valeur propre 144

FIG.2

28

**FIG.3**

## RÉFÉRENCES CITÉES DANS LA DESCRIPTION

**Documents brevets cités dans la description**

- EP 2857856 A

**Littérature non-brevet citée dans la description**

- Les méthodes haute résolution, traitements d'antenne et analyse spectrale. Ouvrage collectif sous la direction. 1998
- **J.L. LACOUME ; P.O. AMBLARD ; P. COMON.** Statistiques d'ordre supérieur pour le traitement du signal. *Dunod,* 2003
- **P. CHEVALIER ; L. ALBERA ; A. FERRÉOL ; P. COMON.** On the virtual array concept for higher order array processing. *IEEE Transations on Signal Processing,* Avril 2005, vol. 53 (4
- **P. CHEVALIER ; A. FERRÉOL ; L. ALBERRA.** High resolution direction finding from higher order statistics : the 2-q MUSIC algorithm. *IEEE Transactions on Signal Processing,* Août 2006, vol. 54 (8
- **P. COMON ; C. JUTTEN.** Handbook of blind source séparation. Academic Press, 2010
- **H. KRIM ; M. VIBERG.** Two decades of array signal processing research. *IEEE Signal Processing Magazine,* Juillet 1996
- **P.D. O'GRADY ; B.A. PEARLMUTTER ; S.T. RICHARD.** Survey of sparse and non sparse methods in source séparation. *International Journal of Imaging systems and Technologies,* 2005, vol. 15 (1
- **S. ARBERET.** Estimation robuste et apprentissage aveugle de modèles pour la séparation de sources sonores. *Thèse de l'université de Rennes I,* 17 Décembre 2008
- **N.Q.K. DUONG ; E. VINCENT ; R. GRIBONVAL.** Undetermined reverberant audio source separation using a full rank spatial covariance model. *IEEE Audio, Speech and Language Processing,* Septembre 2010, 1830-1840
- Contribution à la séparation de sources et à la description des contenus audio. **E. VINCENT.** Habilitation à diriger des recherches. Université de Rennes I, 23 Novembre 2012
- **M. WAX ; T. KAILAH.** Détection of signais by information theoretic criteria. *IEEE Trans. Acoust., Speech, Signal Process.,* Avril 1985, vol. 33 (2), 387-392
- **S. KRITCHMAN ; B. NADLER.** Non-Parametric Détection of the Number of Signais : Hypothesis Testing and Random Matrix Theory. *IEEE Trans. On Signal Process.,* Octobre 2009, vol. 57 (10